# EUROPEAN PATENT SPECIFICATION

(11) **EP 4 513 042 B1**
(45) Date of publication and mention of the grant of the patent: **13.05.2026**
(21) Application number: 24194006.3
(22) Date of filing: 12.08.2024
(51) Int. Cl.: F16B 5/00

(54) **SNAP FASTENING UNIT**
SCHNAPPBEFESTIGUNGSEINHEIT
UNITÉ DE FIXATION PAR ENCLIQUETAGE

(30) Priority: 10.08.2023 CN 202311003927
(43) Date of publication of application: 26.02.2025
(73) Proprietor: Wenzhou Tegele International Trade Co., Ltd, Wenzhou, Zhejiang 325018 (CN)
(72) Inventor: Vitry, Fabrice, SHANGHAI, 201102 (CN); Xiang, Wenguang, WENZHOU, 325018 (CN)
(74) Representative: Metida

(56) References cited:
- US-B2- 7 600 794

## Description

### TECHNICAL FIELD

The present invention relates to the field of mechanical assembly, and more particularly, to a snap fastening unit used for assembling and fastening a device.

### BACKGROUND

Snap fastening is a cost-effective mechanical fastening solution that requires only a simple mounting hole in a thin wall without using screws. The thin wall can be attached to various components such as housing walls, door leaves, shutters, frames, door frames, or plate-shaped parts, thus, the snap fastening is widely used in various applications; for example, the snap fastening can be used to connect two or more components with the aforementioned thin walls together, or to connect a latch, a handle, or other devices to a frame to a thin wall (as disclosed in the application of a locking device in patent literature NO. CN 217581643U).

Various structural forms of snap fastening units have been described in related technologies, such as the simple structural form of a plastic component disclosed in the patent literature NO. US 6042296, and the mechanism formed by multiple components disclosed in the patent literature NO. US 7600794B2, US 8001656B2, and US 8297665B2. The snap fastening unit can be an independent component or a part integrated on related equipment. The snap fastening unit formed by multiple components usually includes a housing having a fastening support wall which limits and supports the thin wall with through holes. The housing further has a seat housing (also known as a head portion) protruding away from the fastening support wall. A snap block capable of sliding horizontally is arranged in the seat housing. The seat housing includes a clamping head engageable with the thin wall to clamp the clamping head onto the thin wall. As the snap block is moveable, the snap block has a fastening position that engages with the fastening support wall to securely clamp the snap block onto the thin wall and a releasing position to release the thin wall along a sliding direction, which allows the snap fastening unit to be disassembled from the thin wall. The snap block is held in the fastening position by a spring. An inclined surface is formed on a side of the snap block that corresponds to an assembly direction of the thin wall supported by the fastening support wall (the direction in which the housing protrudes from the fastening support wall) on the thin wall. During the assembly process, the snap block interacts with a periphery of the through hole in the thin wall. The periphery of the through hole abuts and pushes the inclined surface on the snap block, forcing the snap block to slide until the periphery of the through hole reaches a vertex of the snap block, that is, the snap block retracts to the releasing position. Then, as the periphery of the through hole in the thin wall passes the vertex of the snap block, the snap block is released and returns to the fastening position under a loading force of the spring. The snap block engages with the fastening support wall to fasten the snap fastening unit to the thin wall.

The existing snap fastening unit formed by multiple components has defects as follows. When no compressive forces are applied to the snap block, the snap block remains in a protruding fastening position under a driving force of the spring, which thus requires the inclined surface formed on the snap block. When the snap fastening unit is fastened to the thin wall, the inclined surface guides the periphery of the through hole in the thin wall to press the snap block to slide and avoid the thin wall, thus, the force required to keep the snap block fastened to the thin wall becomes a resistance during the assembly process. The resistance accompanies the entire assembly process and continues to increase until the periphery of the through hole in the thin wall passes the vertex of the snap block. On the one hand, when a strong force is required to keep the snap block fastened to the thin wall, the snap fastening unit cannot be inserted into the through hole in the thin wall with a low resistance; on the other hand, during occasional maintenance or disassembly, whenever it is necessary to detach the snap fastening unit from the thin wall, the operator needs to use a separate tool to maintain the snap block compressed inside the housing (due to the inclined surface, it is difficult to directly press the snap block manually, thus, a tool is required to press the snap block), and simultaneously remove the snap fastening unit from the hole in the thin wall, making the disassembly operation inconvenient.

### SUMMARY

To overcome the shortcomings of the prior art, the present invention aims to provide a snap fastening unit with a snap block capable of maintaining in a retracted state, having the advantages such as quick and easy assembly and disassembly, and low insertion resistance.

To achieve the above objectives, the present invention provides the following technical solutions:
A snap fastening unit for being fastened to one or more thin walls with through holes, including a housing and at least one snap block, the housing having a fastening support wall and a head portion extending away from the fastening support wall, the head portion having a guide channel;
the snap block being restricted to slide directionally on the guide channel of the head portion and being interchangeable between a fastening position and a releasing position on the head portion; in the fastening position, a clamping head of the snap block protruding from the head portion and engaging with the fastening support wall to form a fastened state allowing the snap block to be fastened to the one or more thin walls; in the releasing position, the clamping head of the snap block retracting into the head portion to form a detachable state allowing the head portion of the snap fastening unit to freely enter and exit the through hole in the thin wall;
the snap block including an elastic element providing an elastic loading force that drives the snap block to slide to the fastening position and maintains the snap block in the fastening position,
wherein the snap fastening unit further includes an automatic locking device; the automatic locking device includes a first locking member arranged on the snap block and moveable along with the snap block, and a second locking member arranged on the head portion; when the snap block slides to the releasing position, the first locking member and the second locking member automatically lock together to lock the snap block on the head portion, and meanwhile the elastic element completes energy storage; the automatic locking device further includes a triggering component which drives the first locking member to unlock from the second locking member to release the snap block from the releasing position, and the snap block released at the releasing position is driven by the energy storage of the elastic element to return to the fastening position.

In the above technical solution, the automatic locking device locks the snap block in the releasing position on the head portion to keep in the snap block in the releasing position and unlocks the snap block to release the snap block from the releasing position. When the snap block slides to the releasing position, the automatic locking device automatically locks to lock the snap block in the releasing portion on the head portion (that is, the snap block is in a retracted state), realizing the energy storage of the elastic member. During the assembly and disassembly process, the snap block can be compressed in advance to the releasing position, and the snap block can pass through the trough hole in the thin wall without being pressed by the periphery of the through hole, making the fastening assembly process smoother and more convenient and allowing the parameter setting of the fastening force (provided by the elastic element) to be more flexible. When the snap fastening unit is assembled to the thin wall, the head portion is inserted into the through hole; when the head portion reaches the preset position in the thin wall, the triggering component drives the automatic locking device to release the snap block, and the clamping head pops out under the action of the energy storage of the elastic member, fastening the snap fastening unit to one or multiple thin walls.

In some embodiments, the triggering component is arranged on the snap block and is moveable along with the snap block, the triggering component includes a triggering member movably arranged on the snap block, and a trigger end reset spring for driving the triggering member to move and reset, the triggering member has a triggering end for operating the triggering component, the triggering end is capable of protruding from a front end surface of the clamping head to be exposed on the front end surface under the driving of the trigger end reset spring, the triggering end has an upper triggering surface and a lower avoidance drive surface, a vertex is formed between the upper triggering surface and the lower avoidance drive surface, the upper triggering surface and the lower avoidance drive surface are arranged along a direction in which the head portion is inserted into the through hole in the thin wall; during the process of inserting the head portion into the through hole in the thin wall and the process of removing the head portion from the through hole in the thin wall, the upper triggering surface and lower avoidance drive surface directly contact and abut a periphery of the through hole in the thin wall to drive the triggering end to retract towards a rear side of the front end surface of the clamping head of the snap block, and during the process of inserting the head portion into the through hole in the thin wall, the upper triggering surface directly contacts and abuts the periphery of the through hole in the thin wall to operate the triggering component to unlock the first locking member from the second locking member. In such configuration, the triggering component is arranged on the snap block and is assembled in the housing with the snap block, facilitating the assembly of the product; the triggering component adopts the triggering end allowing the front end surface of the clamping head to be exposed, during the process of inserting the head portion into the through hole in the thin wall, the periphery of the through hole passes over the vertex of the triggering end and simultaneously release the snap block, and the snap block moves to the fastening position under the energy storage of the elastic member to fasten the snap fastening unit onto the thin wall, facilitating the operation; during the process of removing the head portion from the through hole, the lower avoidance drive surface can be abutted by the periphery of the through hole to drive the triggering end of the triggering component to avoid the thin wall, and the periphery of the through hole passes over the vertex of the triggering end; during the process of detaching the snap fastening unit from the thin wall, the force required for triggering the triggering component is not related with the force for resetting the snap block to the fastening position and is relatively smaller.

In some embodiments, the first locking member includes a movable lock piece arranged on the snap block; the movable lock piece includes a lock spring, which provides a spring force to drive the movable lock piece to engage and lock with the second locking member; the triggering component is operated to drive the movable lock piece to act such that the movable lock piece disengages with the second locking member. In such configuration, the first locking member is movably arranged on the snap block and engages with the triggering component to unlock the automatic locking device, allowing for a more reliable and convenient engagement. Correspondingly, the second locking member is a protrusion or a recess formed in the inner wall of the guide channel, that is, the second locking member is a structure which can be directly formed in the housing, allowing for a simple structure and facilitating the processing.

In some embodiments, the movable lock piece is rotatably arranged on the snap block, and a locking portion on the movable lock piece is offset from a rotation center of the movable lock piece. In such configuration, the movable locking piece is rotatable, which requires a small assembly space and can act flexibly and reliably.

In some embodiments, the locking portion is a hook-shaped hook head, and the second locking member is a hooking structure allowing the hook head to hook thereon. Such configuration allows the locking of the automatic locking device to be more stable and reliable.

In some embodiments, the triggering member is a lever arm fixed or integrally formed on the movable lock piece, the lever arm and the movable lock piece forms a lever structure with a pivot point located between the lever arm and the hook head, the lock spring simultaneously serves as the trigger end reset spring for driving the lever arm to be in a non-triggered state, and the lower avoidance drive surface is a convex arc-shaped surface. In such configuration, the triggering component and the movable lock piece form a single component which act in synchronization with each other and form a lever structure, which has a simple and compact structure; furthermore, the lower avoidance drive surface is a convex arc-shaped surface, which ensures the triggering end can be abutted by the thin wall to drive the lever arm to swing.

In some embodiments, the lock spring is a compression coil spring, one end of the compression coil spring abuts the snap block, and the other end of the compression coil spring abuts the lever arm, the lever arm is hook-shaped, and the compression coil spring is located in a hook opening of the lever arm. Such configuration allows the assembly and arrangement of the lock spring to be convenient and reliable.

In some embodiments, the triggering member is slidably arranged on the snap block; a sliding direction of the triggering member is the same as a sliding direction the snap block; one end of the triggering member has the triggering end for operating the triggering component to be in a triggered state, and the other end of the triggering member has a driving end; the locking portion is an abutting end of the movable lock piece, and the movable lock piece includes a tripping action portion in transmission connection with the driving end; the second locking member is a recess formed in the inner wall of the guide channel, and a stop surface is formed in the recess for abutting the abutting end; the other end of the lock spring opposite to the end of the lock spring which abuts the movable lock piece abuts the snap block or the inner wall of the guide channel.

In some embodiments, the tripping action portion is a push arm of the movable lock piece, and the driving end is in push-fit engagement with the push arm.

In some embodiments, the locking portion on the movable lock piece is an abutting end located on a side of the rotation center of the movable lock piece, the second locking member is a recess formed in the inner wall of the guide channel, a stop surface is formed in the recess for abutting the abutting end, the abutting end abuts the stop surface to lock the first locking member with the second locking member, a sliding slot is formed in the movable lock piece and is located between the locking portion and the rotation center of the movable lock piece, an insertion arm is arranged on the triggering member, the insertion arm is slidably inserted into the sliding slot to form a relative sliding engagement between the triggering member and the movable lock piece, the insertion arm abuts a side wall of the sliding slot which is close to the movable lock piece to form a linkage between the triggering member and the movable lock piece in a rotation direction of the movable lock piece; when the head portion is inserted into the through hole in the thin wall, the periphery of the through hole in the thin wall abuts the upper triggering surface, and the triggering member abuts a wall of the sliding slot through the insertion arm, driving the movable lock piece to rotate until the abutting end disengages from the stop surface; the trigger end reset spring is arranged between the triggering member and the movable lock piece, a guide wall that restricts a rotation of the triggering member and guides the triggering member to slide linearly is arranged on the snap block; during the process in which the head portion is removed from the through hole in the thin wall, the lower avoidance drive surface abuts the periphery of the through hole in the thin wall, and the triggering member slides linearly on the guide wall.

In some embodiments, an installation groove is formed along a thickness direction of the snap block, a corresponding protrusion is formed on the snap block to enclose the installation groove; a clamping surface of the clamping head extends to the protrusion; the first locking member and the triggering member are both arranged inside the installation groove. In such configuration, the first locking member and the triggering member are both arranged inside the installation groove, thus, there is no need to provide an additional space inside the guide channel of the housing, resulting in a compact overall structure, convenient processing and assembly, more stable and reliable positioning and sliding of the snap block, allowing the positioning and sliding of the snap block to be more stable and reliable, and ensuring a width dimension of the clamping surface on the snap block.

In some embodiments, the front end surface of the clamping head has a flat end surface extending from a side of the front end surface close to the clamping surface to a side of the front end surface away from the clamping surface along a height direction of the snap block. In such configuration, the flat end surface facilitates holding the snap block and directly compressing the snap block into the guide channel, which provides a convenient operation.

In some embodiments, a chamfered surface is formed on an end corner of the head portion corresponding to an opening of the guide channel and away from the fastening support wall, and when the snap block is in the releasing position, a part of the flat end surface of the snap block is capable of protruding out to be exposed outside the opening of the guide channel through the chamfered surface. In such configuration, the two snap blocks are adopted and the arrangement of the two snap blocks is compact.

In some embodiments, the snap block includes a tool engagement portion for engaging with a tool to complete the sliding of the snap block to the releasing position with the tool, and an operation window is formed in the head portion for exposing the tool engagement portion; the operation window is located on a side of the fastening support wall facing away from a clamping surface of the snap block, and the operation window is covered by a detachable cover plate or directly opened in the head portion. In such configuration, in some applications where the protrusion of the head portion cannot be directly accessed, the snap block can be compressed by a tool from the other side of the head portion, thus completing the movement of the snap block to the releasing position and locking the snap block in the releasing position. After that, the snap fastening unit can be easily extracted from the through hole in the thin wall.

The present invention will be further described in conjunction with the accompanying drawings.

### BRIEF DESCRIPTION OF DRAWINGS

FIG. 1a is a schematic view of a snap fastening unit in an expanded state (the snap block is in a fastening position) according to an embodiment of the present invention;
FIG. 1b is a view taken along a direction of E in FIG. 1a;
FIG. 1c is a sectional view taken along a section line A-A of FIG. 1b;
FIG. 2a is a schematic view of the snap fastening unit in a retracted state (the snap block is in a releasing position) according to Embodiment 1 of the present invention;
FIG. 2b is a schematic view of FIG. 2a viewed from a direction F;
FIG. 2c is a sectional view of FIG. 2b taken along a section line B-B;
FIG. 3 is an exploded view of a snap fastening unit according to Embodiment 1 of the present invention;
FIG. 4a-4c are schematic views illustrating the process of fastening the snap fastening unit to a thin wall according to Embodiment 1 of the present invention;
FIG. 5a-5f are schematic views illustrating the process of detaching the snap fastening unit from a thin wall in the Embodiment 1 of the present invention;
FIG. 6 is a schematic view of a snap fastening unit that can be disassembled with a tool in accordance with an embodiment of the present invention;
FIG. 7 is a schematic view of a snap fastening unit that can be disassembled with a tool in accordance with another embodiment of the present invention;
FIG. 8a is a schematic view of a snap fastening unit in the retracted state (the snap block is in the releasing position) according to Embodiment 4 of the present invention;
FIG. 8b is a schematic view of the snap fastening unit in a triggered state according to Embodiment 4 of the present invention;
FIG. 8c is a schematic view of the snap fastening unit in the expanded state (the snap block is in the fastening position) according to Embodiment 4 of the present invention;
FIG. 8d is an exploded view of the snap fastening unit according to Embodiment 4 of the present invention;
FIG. 9a is a schematic view of the snap fastening unit in the retracted state according to Embodiment 5 of the present invention (the snap block is in the releasing position);
FIG. 9b is a schematic view of the snap fastening unit in a triggered state according to Embodiment 5 of the present invention;
FIG. 9c is schematic view of the snap fastening unit in the expanded state according to Embodiment 5 of the present invention (the snap block is in the fastening position);
FIG. 10a is a schematic view of the snap fastening unit in the retracted state according to Embodiment 6 of the present invention (the snap block is in the releasing position);
FIG. 10b is a schematic view of the snap fastening unit in the triggered state according to Embodiment 6 of the present invention;
FIG. 10c is schematic view of the snap fastening unit in the expanded state according to Embodiment 6 of the present invention (the snap block is in the fastening position)
FIG. 10d is a schematic view of the snap fastening unit in a detachable state according to Embodiment 6 of the present invention; and
FIG. 11 is a structural schematic view of another technical solution adjusted based on Embodiment 5 of the present invention.

### DESCRIPTION OF EMBODIMENTS

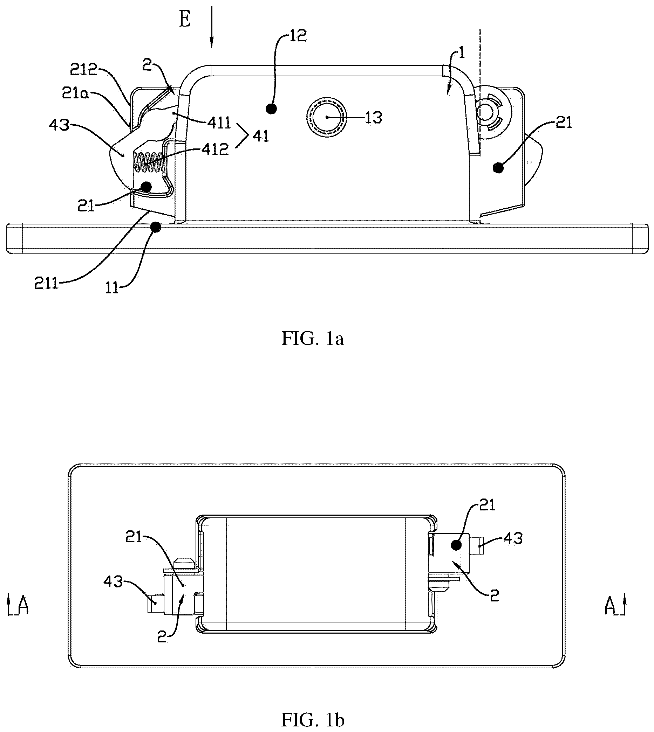

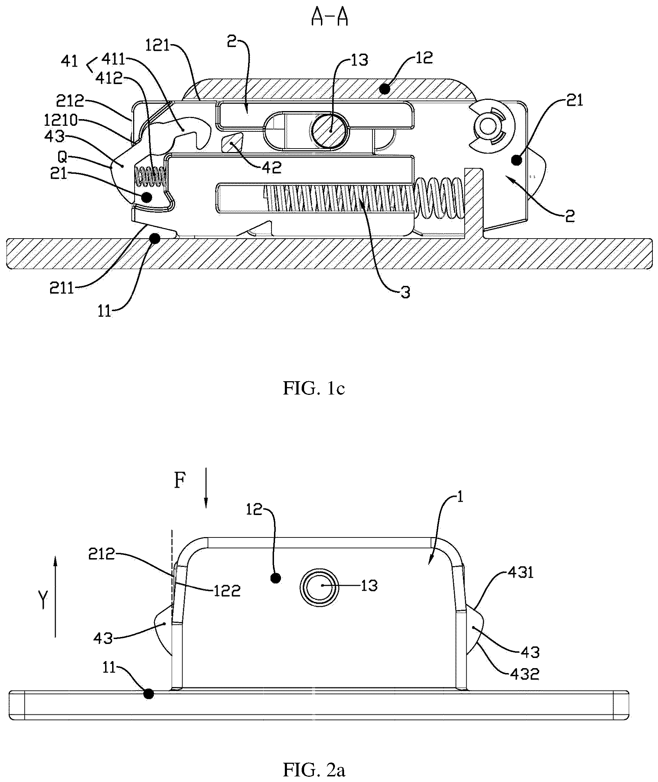

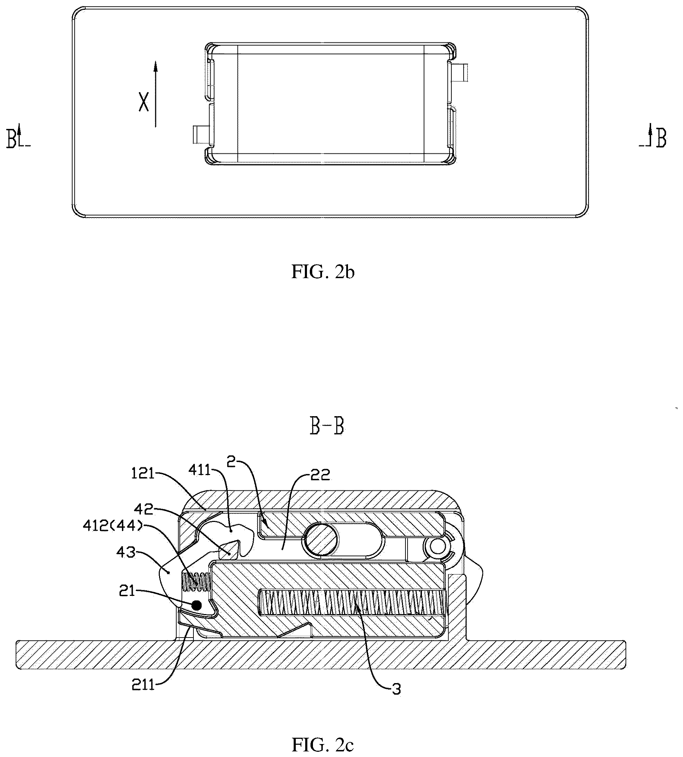

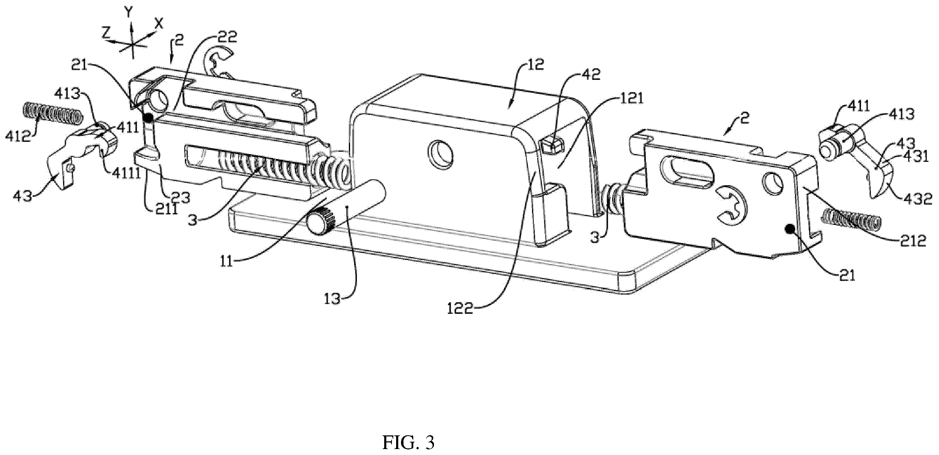

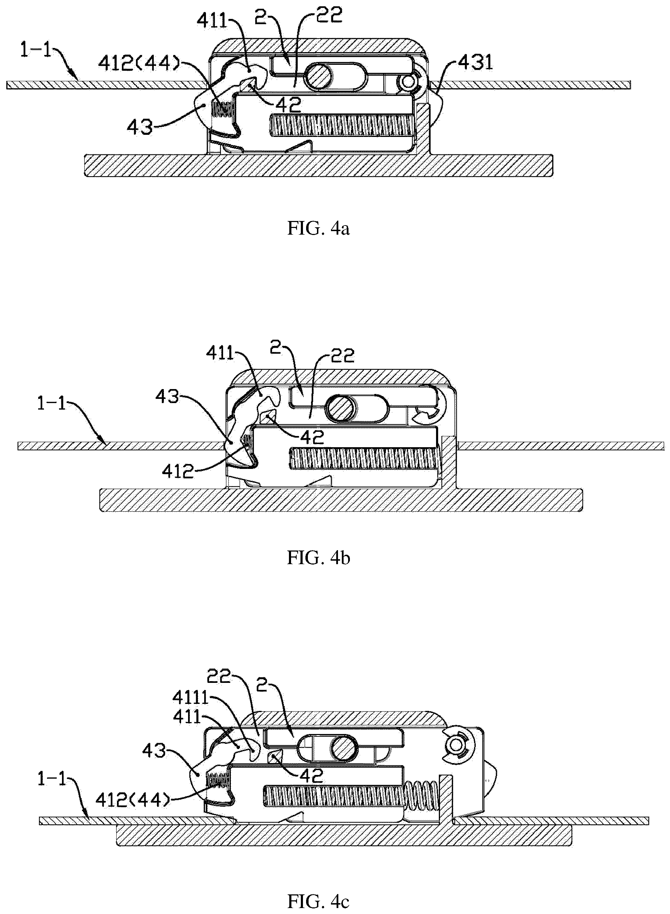

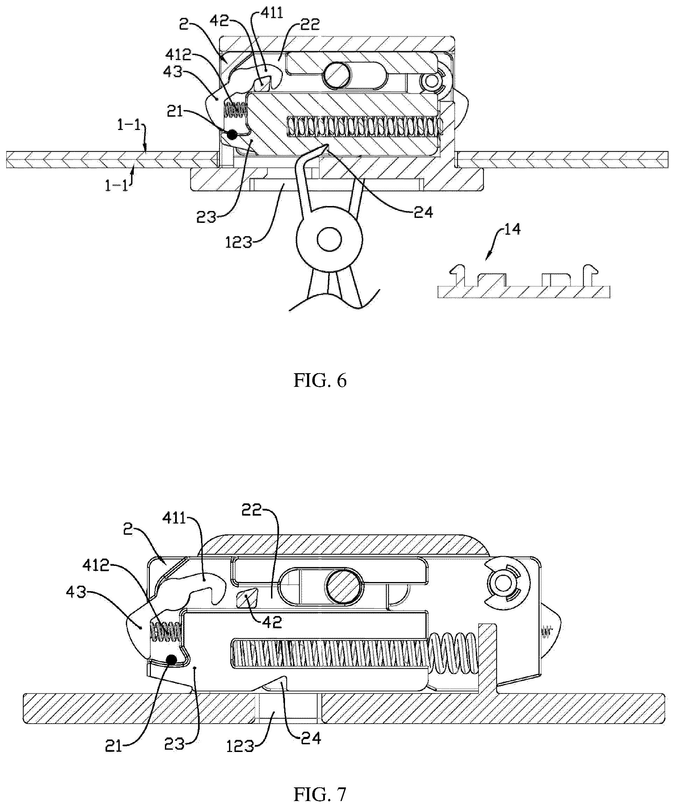

The Referring to FIGS. 1a-5f, the present invention discloses a snap fastening unit which can be fastened to one or multiple thin walls with through holes (it should be noted that "multiple" refers to two or more, and the same applies to similar expressions such as "multiple thin walls" that appear below). In some embodiments, the snap fastening unit can be an independent component which connects two (refer to FIGS. 4a-5f) or more thin walls 1-1 with through holes together (refer to FIG. 6); in other embodiments, the snap fastening unit can also be integrated into a larger unit as part of the larger unit (such as a latch, hinge, handle, door, or other devices) to fasten the larger unit to a frame through the through holes in the thin walls of the frame (such as clamping ports and fastening holes). The snap fastening unit includes a housing 1 and at least one snap block 2. In the application scenario of the snap fastening unit, the housing 1 not only can be an independent housing as shown in the existing drawings, but also can be configured as a part of other devices (such as handles, doors, and hinges). The housing 1 includes a fastening support wall 11 and a head portion 12 extending away from the fastening support wall 11. The head portion 12 has a guide channel 121. The snap block 2 is restricted to slide directionally on the guide channel 121 of the head portion 12. The snap block 2 includes a clamping head 21 to press the thin wall 1-1 against the fastening support wall 11 such that the snap block 2 is fastened to the thin wall 1-1. The snap block 2 is interchangeable between a fastening position (as shown in FIGS. 1a-1c and 4c) and a releasing position (as shown in FIGS. 2a-2c, 4a, and 5c) on the head portion 12. In the fastening position, the clamping head 21 extends out of an opening of the guide channel 121 and engages with the fastening support wall 11 such that the snap block 2 is clamped and fastened to one or more thin walls 1-1, which can be referred to as the snap fastening unit being in a fastened state. In the releasing position, the clamping head 21 of the snap block 2 retracts into the head portion 12, allowing the snap fastening unit to freely enter and exit the through hole in the thin wall 1-1, which can be referred to as the snap fastening unit being in a detachable state. The snap block 2 includes an elastic element 3 providing an elastic loading force for driving the snap block 2 to slide to the fastening position and maintain in the fastening position. The elastic element 3 is usually a compression coil spring, which can be installed using a size space required for the sliding of the snap block. For example, in this embodiment, a spring mounting hole for arranging the elastic element 3 is defined in the snap block 2. To improve the deficiencies of the existing snap fastening unit, the snap fastening unit further includes an automatic locking device. The automatic locking device is used to lock the snap block which slides to the releasing position to maintain the snap fastening unit in a releasing state (i.e., the state in which the snap block is retracted into the housing), such that when the head portion 12 is inserted into the through hole in the thin wall for fastening assembly, there is no need to push the snap block 2 to retract, and the disassembly and assembly operation of the snap fastening unit avoids the elastic loading force of the elastic element 3. In some embodiments, the automatic locking device includes a first locking member 41 arranged on the snap block 2 and moveable along with the snap block 2, and a second locking member 42 arranged on the head portion 12. When the snap block 2 slides to the releasing position, the first locking member 41 and the second locking member 42 automatically lock together to lock the snap block 2 on the head portion 12, and the elastic element 3 completes energy storage at the same time. The automatic locking device also has a triggering component that drives the first locking member 41 to unlock from the second locking member 42 to release the snap block 2 from the releasing position. The snap block 2 released at the releasing position is driven by the energy storage of the elastic element 3 to return to the fastening position.

The automatic locking device automatically interlocks to lock the snap block 2 on the head portion 12 and keep the snap block 2 in the releasing position, and the energy storage of the elastic element 3 is realized. In this way, the snap fastening unit forms a mechanism with locking function and internal energy storage. During the assembly and disassembly process, the snap block 2 can be compressed in advance to the releasing position, and the first locking member 41 is driven to unlock from the second locking member 42 by the triggering component, which releases the snap block 2. The snap block 2 moves under the energy storage of the elastic element 3 to pop out of the clamping head 21. The clamping head 21 of the snap block 2 extends to the fastening position to fasten the snap fastening unit on the thin wall, allowing the snap block 2 to be controllable. During the assembly process, the thin wall is not required to bear the resistance for forcing the snap block to retract to the releasing position, which significantly reduces or eliminates all the pushing force required to assemble the snap fastening unit on the thin wall, making the fastening assembly process smoother and more convenient. Similarly, during the disassembly process, the snap block 2 is compressed to maintain in the releasing position without using any tool manually, which greatly facilitates the disassembly operation of the snap fastening unit and allows the parameter setting of the fastening force (provided by the elastic element 3) to be more flexible.

To make the snap fastening process more convenient, when the snap block 2 is locked in the releasing position, a triggering end of the triggering component protrudes from the head portion 12. During the process of inserting the snap fastening unit into the through hole in the thin wall 1-1 along the head portion 12, the triggering end is exposed on a periphery of the through hole in the thin wall 1-1, thus, during the process of pushing the head portion 12 into the through hole in the thin wall 1-1, the thin wall 1-1 directly applies contact pressure to the triggering end of the triggering component to complete the triggering operation of unlocking the automatic locking device, making the snap fastening assembly process smoother. Although the thin wall 1-1 may receive the resistance from the triggering component when driving the triggering component, and the snap block 2 may abut the periphery of the through hole in the thin wall 1-1 before the head portion 12 reaches the fastening position on the thin wall 1-1, the remaining stroke of the snap block 2 in the thin wall 1-1 before reaching the fastening position can be designed to be shorter, and a front end surface 21a of the clamping head 21 can be a flat surface. Therefore, even if the released snap block 2 applies a large contact pressure on the periphery of the through hole in the thin wall 1-1, the remaining journey in the through ole of the thin wall is also relatively easy.

Therefore, those skilled in the art, based on the existing technology and under the guidance of the present invention, can design a triggering component which is independent of the periphery of the through hole in the thin wall and can be directly triggered. In other words, after the head portion of the snap fastening unit is fully inserted into the through hole in the thin wall, the triggering component can be artificially triggered by an auxiliary actuator, for example, the triggering component can be manually triggered by pressing a button, pulling a wire, or through a magnetic field signal.

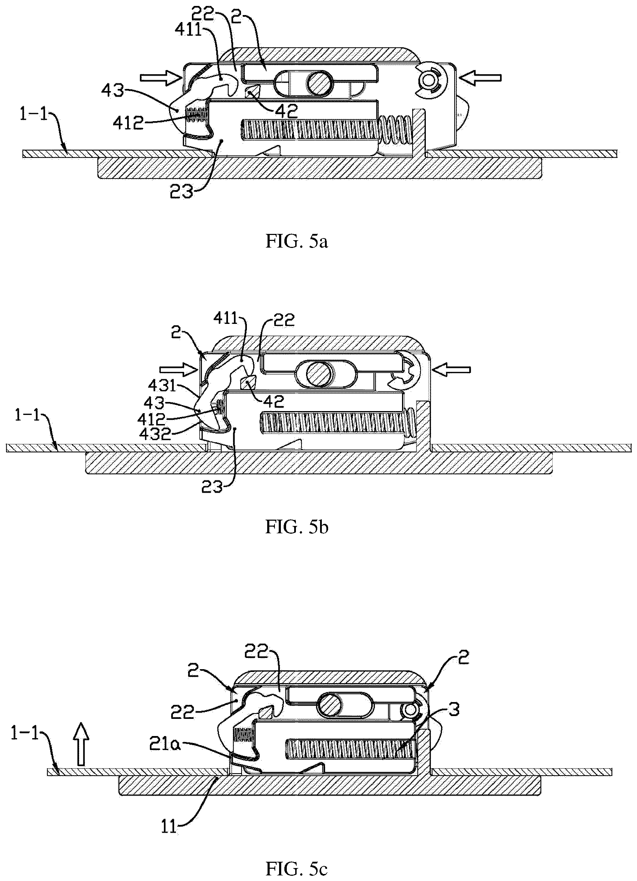

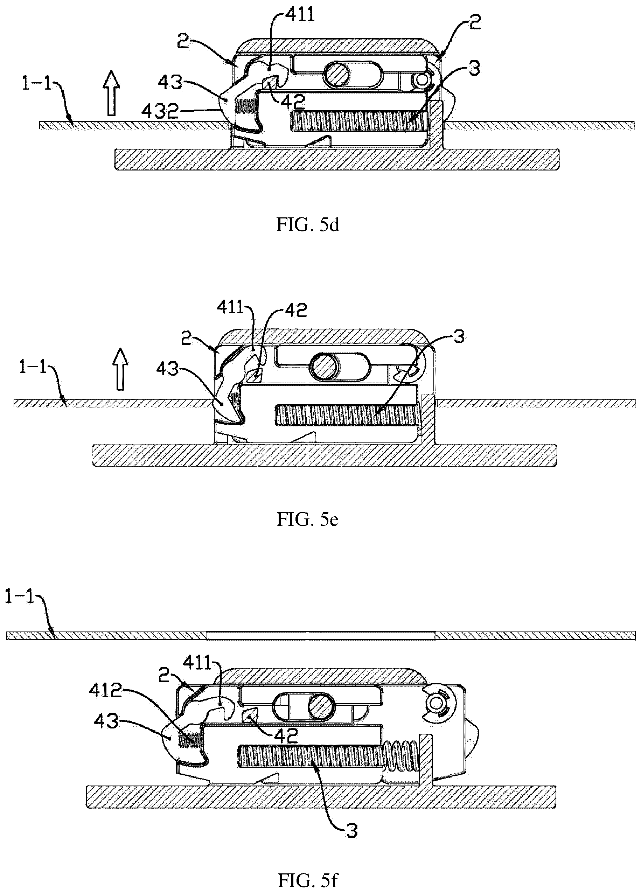

The triggering component is configured on the snap block 2 and is moveable along with the snap block 2. By associating the triggering component with the snap block 2, the triggering component can be associated with the snap block 2 in a modular form, facilitating the assembly of the product. The triggering component includes a triggering member 43 movably arranged on the snap block 2 and a trigger end reset spring 44 for driving the triggering member 43 to move and reset. The triggering member 43 has a triggering end for operating the triggering component. Under the driving of the trigger end reset spring 44, the triggering end protrudes out to be exposed on the front end surface 21a of the clamping head 21 of the snap block 2. A position of the triggering end on the front end surface 21a is limited by a stopper limit structure (such as a wall 1210 in this embodiment) in the guide channel 121. The triggering end has an upper triggering surface 431 and a lower avoidance drive surface 432. A connection position of the upper triggering surface 431 and the lower avoidance drive surface 432 forms a vertex Q. The upper triggering surface 431 and the lower avoidance drive surface 432 are arranged along a direction in which the head portion 21 is inserted into the through hole in the thin wall 1-1. During the process of inserting the head portion 21 into the through hole in the thin wall 1-1 and removing the head portion 21 from the through hole in the thin wall 1-1, the upper triggering surface 431 and the lower avoidance drive surface 432 can be pressed by the periphery of the through hole in the thin wall 1-1 to trigger the triggering end of the triggering member such that the triggering end retracts backwards toward the front end surface 21a of the clamping head 21 of the snap block 2. In this way, the periphery of the through hole in the thin wall 1-1 can pass over the vertex Q of the triggering end, and during the process of inserting the head portion 12 into the through hole in the thin wall 1-1, the upper triggering surface 431 is directly pressed by the periphery of the through hole in the thin wall 1-1 to operate the triggering component to unlock the first locking member 41 from the second locking member 42. During the assembly of the snap fastening unit, the head portion 21 is inserted along the through hole in the thin wall. When the head portion 21 reaches a certain position, the upper triggering surface 431 contacts the periphery of the through hole in the thin wall. As the head portion 21 is continuously inserted into the through hole in the thin wall, the periphery of the through hole in the thin wall abuts the upper triggering surface 431, causing the triggering component to actuate. The triggering end retracts towards a rear side of the front end surface 21a of the clamping head 21 of the snap block 2 until the periphery of the through hole in the thin wall reaches the vertex Q, allowing the triggering end to avoid the periphery of the through hole in the thin wall. At the same time, the first locking member 41 unlocks from the second locking member 42, and the snap block 2 is released. After the head portion 12 is inserted in place, the snap block 2 moves to the fastening position, fastening the snap fastening unit to the thin wall (as shown in FIGS. 4a-c). During the disassembly process, when the head portion 12 is pulled out of the through hole in the thin wall to a certain position, the lower avoidance drive surface 432 contacts the periphery of the through hole in the thin wall; as the head portion 12 is continuously pulled out of the through hole in the thin wall, the periphery of the through hole abuts the lower avoidance drive surface 432, causing the triggering component to move and avoid the periphery of the through hole until the through hole reaches the vertex Q and the head portion 12 is completely removed out of the through hole (as shown in FIGS. 5a-5f). Under the guidance of the present invention, those skilled in the art can also configure the triggering component on the housing 1, but such configuration requires separate assemblies of the triggering component and the snap block 2 onto the housing **1,** and also requires a structure for installing the triggering component on the housing **1,** which causes inconvenience in processing, assembly, and structural design. An installation groove 22 is formed along a thickness direction of the snap block 2, and a corresponding protrusion 23 is formed on the snap block 2 to enclose the installation groove 22. The clamping surface 211 of the clamping head 21 extends onto the protrusion 23, and the first locking member 41 and the triggering component are both arranged inside the installation groove 22. Since both the first locking member 41 and the triggering component are arranged inside the installation groove 22, there is no need to provide an additional space inside the guide channel 121 of the housing **1,** resulting in a compact overall structure, convenient processing and assembly, more stable and reliable positioning and sliding of the snap block 2, and ensuring a width dimension of the clamping surface 211 on the snap block 2.

In an embodiment, the first locking member 41 includes a movable lock piece 411 rotatably arranged on the snap block 2. The movable lock piece 411 is mounted on the snap block 2 through a pivot shaft 413. A locking portion 4111 on the movable lock piece 411 is offset from a rotation center of the movable lock piece 411, and the locking portion 4111 can swing around the pivot shaft of the movable lock piece 411. The locking portion 4111 is a hook-shaped hook head. The movable lock piece 411 engages with a lock spring 412, which provides a spring force to drive the movable lock piece 411 to lock with the second locking member 42. The triggering component is operated to a triggered state to drive the movable lock piece 411 to unlock from the second locking member 42. With the above-mentioned installation groove 22 on the snap block 2, the second locking member 42 can be a protrusion arranged on the inner wall of the guide channel 121 of the head portion 21. The protrusion is inserted into the installation groove 22 to realize a compact engagement. It is understood that, in the present invention, the second locking member 42 can be a recess formed in the inner wall of the guide channel 121 of the head portion 21 to accommodate different movable lock pieces 411 and engage with different movable lock pieces 411. For example, when there is no installation grooves formed in the snap block 2 and a avoidance recess is formed inside the head portion 21, the second locking member 42 can be a recess formed in the inner wall of the guide channel 121 of the head portion 21. The movable lock piece 411 is driven by the lock spring 412 to automatically hook into the second locking member 42 when the snap block 2 slides to the releasing position. The lock spring 412 can be a compression spring, tension spring, or torsion spring; in some embodiments, the lock spring 412 can be a compression spring. The movable lock piece 411 is driven by the triggering member 43 to overcome the force of the lock spring 412 and swing, such that the hook head (the locking portion 4111) of the movable lock piece 411 can disengage from the protrusion (the second locking member 42). The hook head tends to snap onto the protrusion under the driving of the lock spring 412, such that when the snap block 2 slides to the releasing position, the hook head (the locking portion 4111) automatically hooks into the protrusion under the force of the lock spring 412 to achieve automatic locking. The process of automatic locking is specifically as follows: when the snap block 2 is about to slide to the releasing position, the hook head reaches the position of the protrusion, and the hook head (the locking portion 4111) is pushed up and bounces by the protrusion; when the snap block 2 reaches the releasing position, the hook head (the locking portion 4111) automatically hooks into the protrusion under the driving of the lock spring 412 to lock with the protrusion; the hook head abuts the triggering component, driving the hook head (the locking portion 4111) of the movable lock piece 411 to swings out of the protrusion, thereby releasing the snap block 2. The snap block 2 automatically slides to the fastening position under the force of the energy storage of the lock spring 412. The automatic locking device uses a rotatable movable lock piece 411 to hook on the protrusion to complete the locking (as shown in FIGS. 5b to 5c). To facilitate abutting the protrusion to move by the hook head (the locking portion 4111) when the hook head contacts the protrusion, it is obvious for those skilled in the art to configure the protrusion with an inclined surface and the hook head (the locking portion 4111) with an arc-shaped outer contour. The rotatable movable lock piece 411 has the advantages of sensitive and reliable action, and is reliable by using a hook-and-loop hooking form to achieve automatic locking. Before the snap block 2 reaches the releasing position, the hook head (the locking portion 4111) is supported and limited by the wall of the installation groove (thus the position of the hook head is maintained, and the limiting structural can also be a rotation-angle limiting structure of other rotatable members), such that the hook head can be hooked on the protrusion.

It is understood that, under the guidance of the present invention, those skilled in the art can also select corresponding ones from the existing locking structures. In an alternative embodiment, the first locking member 41 and the second locking member 42 can also be respectively a sliding lock tongue and a lock hole. In addition, it is obvious for those skilled in the art that the structural forms of the first locking member 41 and the second locking member 42 can be interchangeable. For example, the first locking member 41 provided in this embodiment is the movable lock piece 411 with the hook head (the locking portion 4111), and the second locking member is the protrusion. In other embodiments, the first locking member 41 can be a protrusion or recess formed in the snap block, the second locking member 42 can include the movable lock piece 411 with the hook head (the locking portion 4111), and the movable lock piece 411 can be installed on the head portion. However, the structure in which the first locking member 41 is configured as the movable lock piece 411 on the snap block 2 and the triggering component and the first locking member 41 are both arranged on the snap block 2, can facilitate the assembly of the snap fastening unit. At the same time, considering that the snap block is usually designed to be flat, the locking member is configured to be rotatable around an axis along the thickness direction of the snap block 2 (an X-axis direction in the drawing); that is, the pivot shaft of the movable lock piece 411 is arranged along the thickness direction of the snap block 2.

Furthermore, the triggering member 43 adopts a single-component design that acts in synchronization with the movable lock piece, rather than a component being independent of the movable lock piece. In detail, the triggering member 43 is a lever arm fixed or integrally formed on the movable lock piece 411, and the lever arm (the triggering member 43) and the movable lock piece 411 form a lever structure with a pivot point located between the lever arm (the triggering member 43) and the hook head (the locking portion 4111). The lock spring 412 simultaneously serves as the trigger end reset spring 44 that drives the lever arm to be in a non-triggered state. The lower avoidance drive surface 432 is a convex arc-shaped surface. According to the lever principle, those skilled in the art can obtain the required curvature of the convex arc-shaped surface and a distance parameter between the pivot point and the convex arc-shaped surface through parameter calculation and limited experiments.

To facilitate the installation and arrangement of the lock spring 412, the lock spring 412 is a compression coil spring. One end of the compression coil spring abuts the snap block 2, and the other end of the compression coil spring abuts the triggering member 43. The triggering member 43 is hook-shaped, and the compression coil spring is located in a hook opening of the triggering member 43. It is understood that, the lock spring 412 can also be a torsion spring. In addition, one end of the compression coil spring can also abut a wall of the guide channel; however, such a configuration requires forming a corresponding wall in the guide channel, causing the structure to be more complicated.

Since the snap block 2 can reach the releasing position without being abutted by the thin wall, there is no need for forming the inclined surface on the snap block for being pressed by the thin wall. Therefore, in this embodiment, the front end surface 21a of the clamping head 21 has a flat end surface 212 extending from a side of the front end surface 21a close to the clamping surface 211 to a side of the front end surface 21a away from the clamping surface 211 along a height direction of the snap block 2. Compared to the inclined surface formed on the snap block of the existing snap fastening units, the flat end surface facilitates holding the snap block with a hand and provides the possibility and convenience of directly compressing the snap block into the guide channel in some applications of the snap fastening unit.

To further facilitate pressing the snap block 2, a chamfered surface 122 is formed on an end corner of the head portion 12 which corresponds to the guide channel 121 and is away from the fastening support wall 11. When the snap block 2 is located at the releasing position, a part of the flat end surface 212 can protrude out to be exposed outside the head portion 12 through the chamfered surface 122 (as shown in FIG. 2a). In this way, even if the snap block 2 is located at the releasing position, a part of the clamping head 21 can be exposed outside the opening of the guide channel through the chamfered surface 122, facilitating compressing the snap block to be in place.

To facilitate compact installation and convenient assembly of the snap block 2, two snap blocks 2 facing opposite directions are arranged in the guide channel 121. The two snap blocks 2 are stackedly arranged in the guide channel along the thickness direction of the snap block 2. Each snap block 2 includes an elastic element 3. A waist-shaped hole, which is adapted to the sliding stroke of the snap block 2, is defined the snap block 2. A limit pin 13 is fixed on the head portion 12. The limit pin 13 passes through the waist-shaped hole of the snap block 2 to restrict the snap block 2 on the head portion 12. Such a configuration has the advantage of compact structure. It is understood that, those skilled in the art can also use a single snap block 2 in combination with existing technology.

As shown in FIG. 6 and FIG. 7, in some applications where one end of the protrusion on the head portion 12 cannot be directly touched, for example, the hole defined in the thin wall is a blind hole and the head portion is inserted into the blind hole, in order to allow the snap block to still be compressed to the releasing position, that is, in order to allow the technical solutions in Embodiments 2 and 3 of the present invention to be well applied, a tool engagement portion 24, which can be a notch or a protrusion, is arranged on the snap block 2 for engaging with a tool to complete the sliding of the snap block 2 to the releasing position with the tool. An operation window 123 for revealing the tool engagement portion 24 is formed in the head portion 12. The operation window 123 is located on a side of the fastening support wall 11 facing away from the clamping surface 211 of the snap block 2, that is, facing in the opposite direction of the protrusion on the head portion 12. The operation window 123 can be covered with a detachable cover plate 14 (as shown in FIG. 6) or directly opened in the head portion 12 (as shown in FIG. 7).

### Embodiment 4

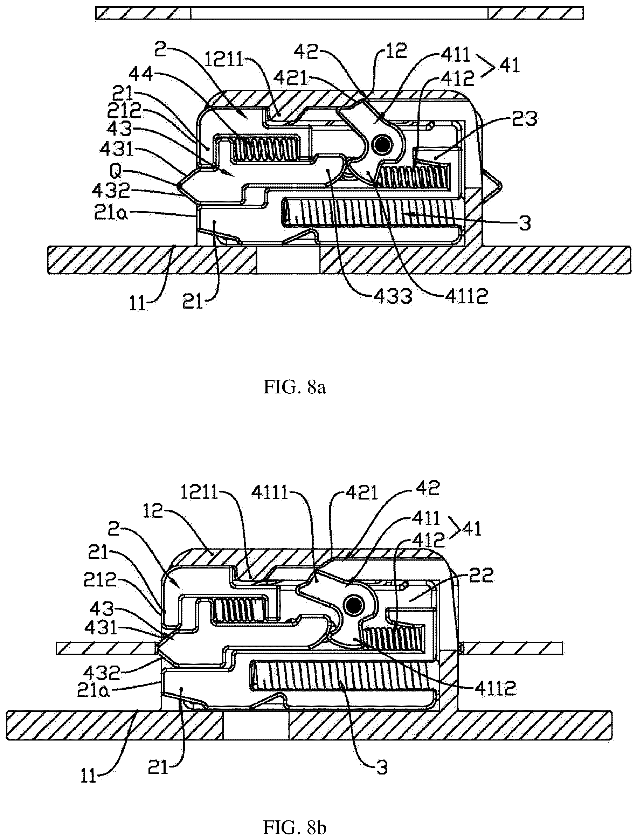

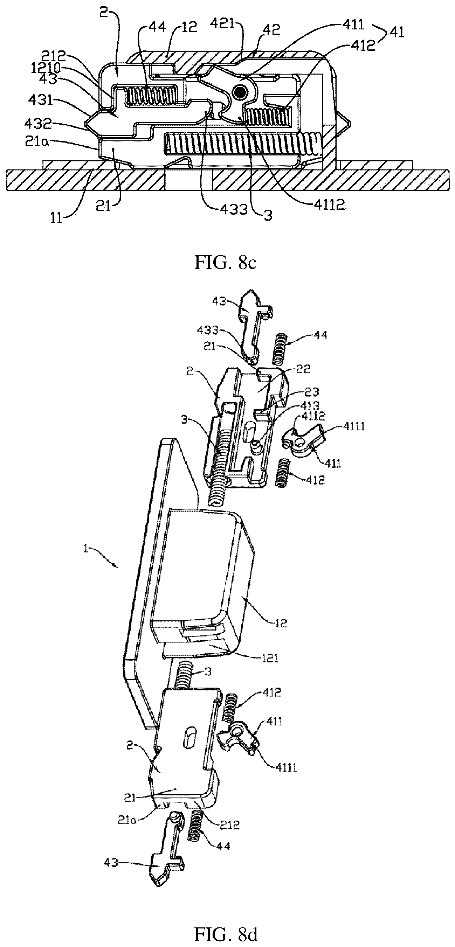

As shown in FIGS. 8a to 8d, the main difference between the snap fastening unit provided in Embodiment 4 and Embodiment 1 lies in the structural forms of the triggering member, the first locking member 41, and the second locking member 42. Those skilled in the art can understand the contents of the corresponding parts by combining the drawings and the description of the Embodiment 1. To facilitate a concise explanation of the solution of this embodiment, the parts of this embodiment which are the same as those of Embodiment 4 will not be repeated.

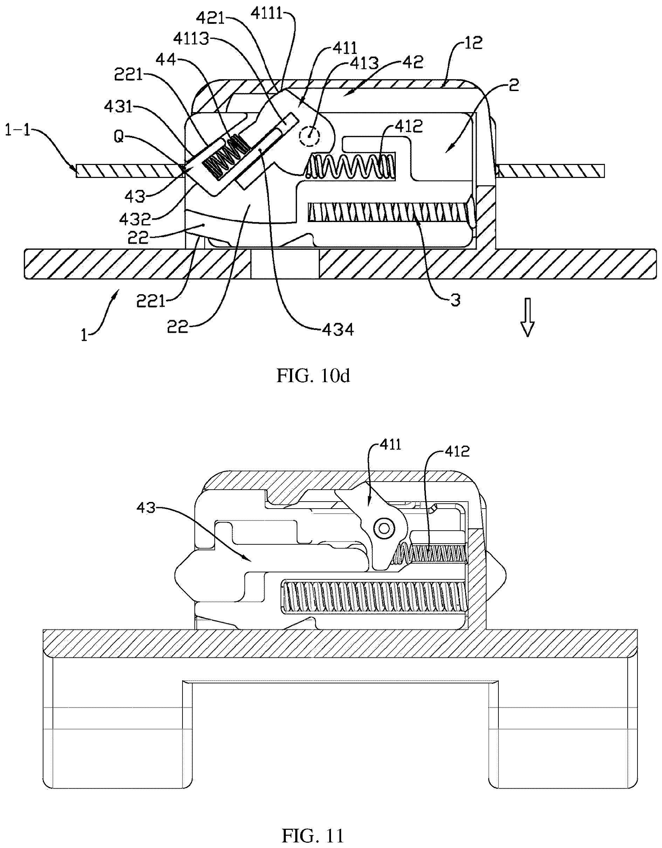

In this embodiment, the triggering member 43 is also configured on the snap block 2, and the first locking member 41 also adopts the rotatable movable lock piece. The snap block 2 is also provided with the installation grooves in which the triggering member 43 and the first locking member 41 can be installed, etc. The difference lies in that the triggering member 43 is a sliding component configured on the snap block 2, with a sliding direction of the triggering member 43 being the same as a sliding direction of the snap block 2. One end of the triggering member 43 has a triggering end, and the other end of the triggering member 43 has a driving end 433. The locking portion 4111 on the movable lock piece is an abutting end of the movable lock piece, and a tripping action portion 4112 in transmission connection with the driving end 433 is arranged on the movable lock piece. The tripping action portion 4112 is a push arm on the movable lock piece, and the driving end 433 engages with the push arm. The trigger end reset spring 44 is a helical spring abutting the triggering member 43. It is understood that, since the triggering member 43 and the movable lock piece interlocks, the function of the trigger end reset spring 44 can also be realized through the lock spring 412, that is, the lock spring 412 can be used as the trigger end reset spring 44 at the same time, omitting a specially-designed trigger end reset spring (such as another variant solution provided in FIG. 11 of this embodiment). However, the trigger end reset spring 44 can better press the triggering member 43 to a determined position, prevent the triggering member 43 from moving, and reduce noise. The second locking member 42 is recess formed in the inner wall of the guide channel 121, and a stop surface 421 is formed in the recess for the abutting against the abutting end. Both the upper triggering surface 431 and the lower avoidance drive surface 432 are designed as inclined surfaces to facilitate being pressed by the thin wall. When the snap block 2 slides to the releasing position, the locking portion 4111 falls into the recess under the driving of the lock spring 412, and the locking portion 411 is driven by the elastic element 3 to abut the stop surface 421, thereby locking the snap block 2 in the releasing position. During the triggering operation of the triggering member, the periphery of the through hole in the thin wall abuts the upper triggering surface 431 or the lower avoidance drive surface 432, causing the triggering member 43 to slide and push the movable lock piece 411 to rotate. The locking portion 4111 of the movable lock piece 411 swings to disengage with the stop surface 421 to unlock the automatic locking device, and thus the snap block 2 is released. Under the energy storage of the elastic element 3, the snap block 2 returns to the fastening position. The other end of the lock spring 412 opposite to the end of the lock spring 412 which abuts the movable lock piece 411 can abut the snap block 2. A spring support wall can be arranged in a lock spring receiving portion of the installation groove; or as shown in FIG. 11, an opening can be formed in one end of the lock spring receiving portion of the installation groove that allows one end of the lock spring 412 to extend out therefrom, and the end of the lock spring 412 abuts the wall of the guide channel. With such configuration, during the initial assembly of the lock spring 412, there is no need to deliberately compress the lock spring 412, and during the subsequent assembly of the snap block 2 into the housing 1, the lock spring 412 also does not provide spring force to the movable lock piece 411, thus, there is no need to deliberately press the movable lock piece 411, making the assembly operation more convenient.

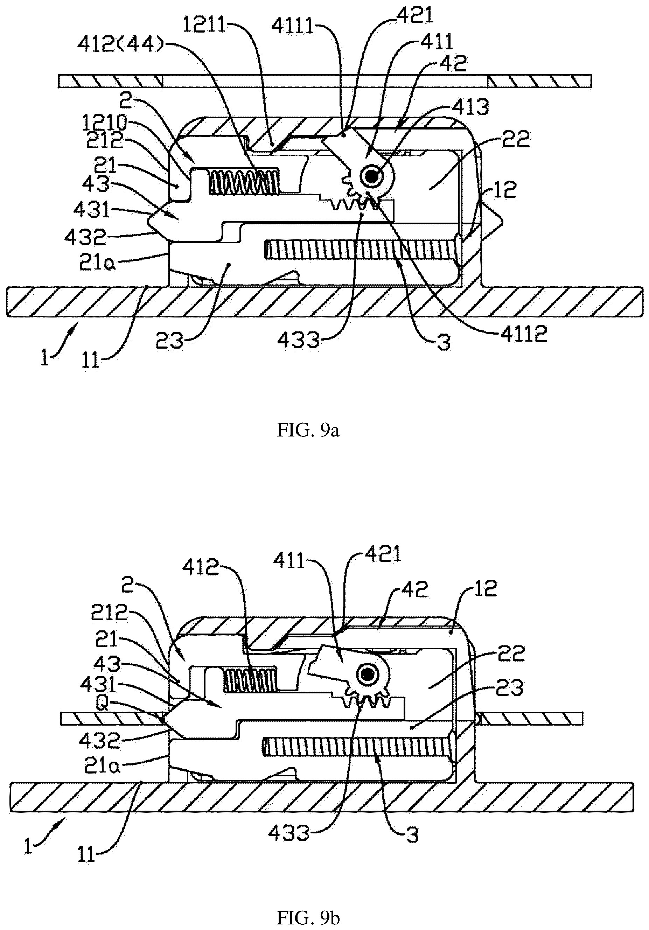

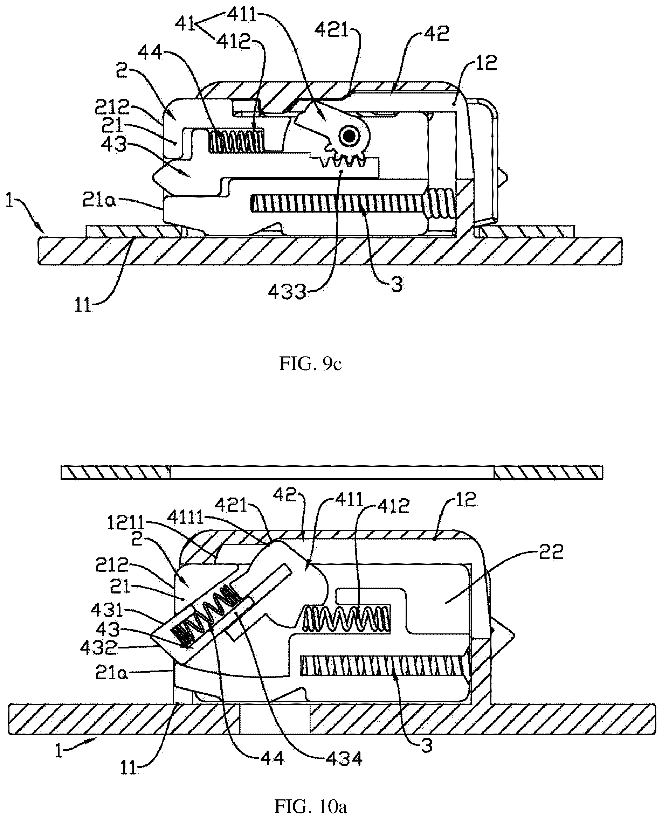

An anti-drop protrusion 1211 for stopping the abutting end is arranged in the guide channel 121. The abutting end reaches a position corresponding to the anti-drop protrusion 1211 under the driving of the lock spring 412, preventing the snap block 2 from escaping from the guide channel 121 due to the force of the elastic element 3. As shown in FIGS. 9a to 9c, the present invention also provides a solution for Embodiment 5. When the snap block 2 is disassembled, the abutting end of the movable lock piece 411 can be pressed, allowing the abutting end to pass over the anti-drop protrusion 1211. Therefore, compared to the configurations of Embodiments 1 to 3 and the configurations in the existing technology, the solution in this embodiment can keep snap block 2 inside the housing 1 without additional accessories.

### Embodiment 5

The main difference between the technical solution of this embodiment and the technical solution of Embodiment 4 lies in the transmission connection structure between the triggering member 43 and the movable lock piece 411. In this embodiment, the tripping action portion 4112 of the movable lock piece 411 in transmission connection with the driving end 433 adopts a gear surface, and the driving end 433 of the triggering member 43 is a rack meshing with the gear surface. Therefore, due to the tooth transmission between the triggering member 43 and the movable lock piece 411, under the transmission connection, a single spring can be used to simultaneously reset the triggering member 43 and the movable lock piece 411.

### Embodiment 6

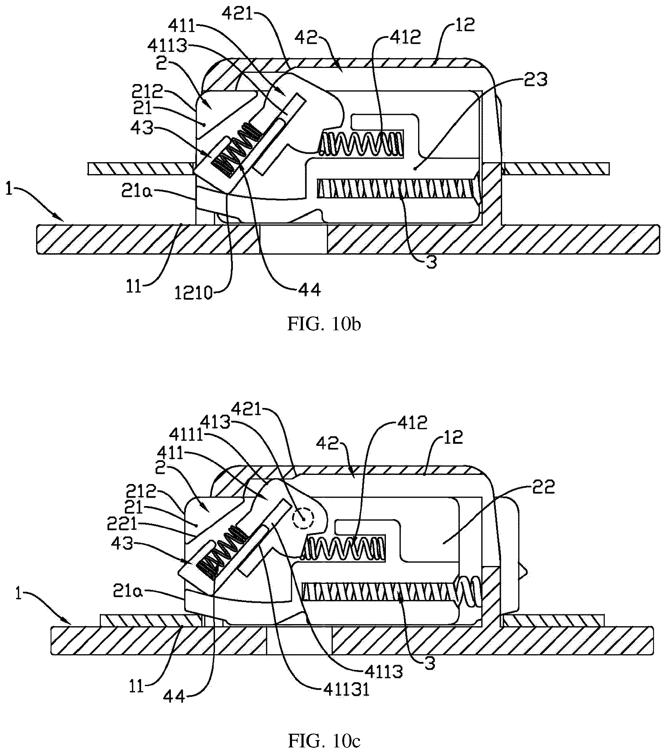

As shown in FIGS. 10a to 10c, the main difference between the snap fastening unit provided in this embodiment and Embodiment 1 lies in the structural forms of the triggering component, the first locking member, and the second locking member 42. Those skilled in the art can understand the corresponding parts by combining the drawings and the description of the Embodiment 1. To facilitate a concise explanation of the solution of this embodiment, the parts of this embodiment which are the same as those of Embodiment 1 will not be repeated.

In this embodiment, the triggering member 43 is also arranged on the snap block 2, and the first locking member 41 also adopts a rotatable movable lock piece. The snap block 2 is also provided with the installation grooves 22 in which the triggering member 43 and the first locking member 41 are installed, etc. The difference lies in that the locking portion 4111 of the movable lock piece 411 is an abutting end located on a side of a rotation center of the movable lock piece 411 (as shown by the position of the pivot shaft 413), and the second locking member 42 is a recess formed in the inner wall of the guide channel 121. The stop surface 421 is formed in the recess for abutting the abutting end. A sliding slot 4113 is formed in the movable lock piece 411, located between the locking portion 4111 and the rotation center of the movable lock piece 411 (as shown by the position of the pivot shaft 413). An insertion arm 434 is arranged on the triggering member 43. The insertion arm 434 is slidably inserted in the sliding slot 4113, forming a relative sliding engagement between the triggering member 43 and the movable lock piece 411. The insertion arm 434 of the triggering member 43 engages with a side wall 41131 of the sliding slot 4113 close to the movable lock piece 411, forming a linkage between the triggering member 43 and the movable lock piece 411 in the rotation direction of the movable lock piece 411; thus, when the head portion 12 is inserted into the through hole of thin wall 1-1, the periphery of the through hole in the thin wall 1-1 abuts the upper triggering surface 431, and the triggering member 43 abuts the side wall of the sliding slot 4113 through the insertion arm 434, driving the movable lock piece 411 to rotate until the abutting end disengages from the stop surface 421, releasing the snap block 2 (as shown in FIGS. 10a~10c); when the movable lock piece 411 is driven by the lock spring 412 to rotate and reset, the sliding slot of the movable lock piece 411 abuts and pushes the insertion arm 434 to drive the triggering member 43 to rotate and reset through the lock spring 412. The trigger end reset spring 44 is arranged between the triggering member 43 and the movable lock piece 411, that is, one end of the trigger end reset spring 44 abuts the triggering member 43, and the other end of the trigger end reset spring 44 abuts the movable lock piece 411. A guide wall 221 that limits the rotation of the triggering member 43 and guides the straight-line sliding of the triggering member 43 is arranged on the snap block 2. The guide wall 221 is a part of the wall of the installation groove 22, which is more convenient for molding. As shown in FIG. 10d, with the guide wall 221, when the head portion 12 disengages from the through hole in the thin wall 1-1, the lower avoidance drive surface 432 is abutted by the periphery of the through hole in the thin wall 1-1, and the triggering member 43 is only allowed to slide. The triggering end of the triggering member 43 retracts towards a rear side of the front end surface of the clamping head 21 of the snap block 2, and cannot drive the movable lock piece 411 to rotate, that is, only the sliding avoidance of the triggering member 43 occurs, and the first locking member 41 and the second locking member 42 remain in a locked state. Such configuration makes the snap fastening unit still in a locked state after disassembly, which facilitates the subsequent assembly operation. The upper triggering surface 431 and the lower avoidance drive surface 432 are both designed as inclined surfaces which can be pressed by the thin wall. When the snap block 2 slides to the releasing position, the locking portion 4111 falls into the recess under the driving of the lock spring 412, and the locking portion 4111 is driven by the elastic element 3 to abut the stop surface 421 to lock the snap block in the releasing position. During the triggering operation of the triggering component, the periphery of the through hole in the thin wall abuts the upper triggering surface 431 to drive the triggering member 43 to slide, and the insertion arm 434 pushes the movable lock piece 411 to rotate. The locking portion 4111 of the movable lock piece 411 swings to disengage with the stop surface 421 to unlock the automatic locking device and release the snap block 2. Under the energy storage of the elastic element 3, the snap block 2 returns to the fastening position.

An anti-drop protrusion 1211 for stopping the abutting end is arranged in the guide channel 121. The abutting end reaches the position corresponding to the anti-drop protrusion 1211 under the driving of the lock spring 412, preventing the snap block 2 from escaping from the guide channel due to the force of the elastic element 3. When the snap block 2 is disassembled, the snap block 2 can abut the abutting end of the movable lock piece 411, allowing the abutting end to pass over the anti-drop protrusion 1211.

The snap fastener provided in the present invention has the advantages as follows. Firstly, the snap block 2 can be locked in the releasing position, thus, when the snap fastening unit is disassembled, the snap block 2 can be pre-locked and is in a retracted state, facilitating the assembly and disassembly; although the triggering member of the automatic locking device forms a certain obstruction to the thin wall (the triggering member needs to abut the periphery of the through hole in the thin wall to unlock the automatic locking device), the resistance is different from the snap fastening loading force of the snap fastening unit, and the force required for triggering the automatic locking device is smaller. Secondly, the first locking member 41 of the automatic locking device is a movable component, and both the first locking member and the part (triggering member) that applies action to the first locking member are arranged on the snap block, achieving an integrated assembly which is assembled on the head portion, which facilitates the assembly; furthermore, the assembly structural form is a combination of a channel with a waist-shaped hole and a transverse pin on the snap block, or the anti-drop protrusion inside the channel, making assembly operation simple and convenient. Thirdly, since the snap block 2 can be pre-locked in the releasing position, the inclined surface formed on traditional snap blocks can be omitted and a flat end surface can be used, making it easier for operators to directly pinch the snap block to complete the retraction operation of the snap block 2. Such configuration further facilitates using the snap fastener in some situations.

## Claims

1. A snap fastening unit for being fastened to one or more thin walls with through holes, comprising a housing (1) and at least one snap block (2), the housing (1) having a fastening support wall (11) and a head portion (12) extending away from the fastening support wall (11), the head portion (12) having a guide channel (121);
the snap block (2) being restricted to slide directionally on the guide channel (121) of the head portion (12) and being interchangeable between a fastening position and a releasing position on the head portion (12); in the fastening position, a clamping head (21) of the snap block (2) protruding from the head portion (12) and engaging with the fastening support wall (11) to form a fastened state allowing the snap block (2) to be fastened to the one or more thin walls (1-1); in the releasing position, the clamping head (21) of the snap block (2) retracting into the head portion (12) to form a detachable state allowing the head portion (12) of the snap fastening unit to freely enter and exit the through hole in the thin wall (1-1);
the snap block (2) comprising an elastic element (3) providing an elastic loading force that drives the snap block (2) to slide to the fastening position and maintains the snap block (2) in the fastening position,
wherein the snap fastening unit further comprises an automatic locking device; the automatic locking device comprises a first locking member (41) arranged on the snap block (2) and moveable along with the snap block (2), and a second locking member (42) arranged on the head portion (12); when the snap block (2) slides to the releasing position, the first locking member (41) and the second locking member (42) automatically lock together to lock the snap block (2) on the head portion (12), and meanwhile the elastic element (3) completes energy storage; the automatic locking device further comprises a triggering component which drives the first locking member (41) to unlock from the second locking member (42) to release the snap block (2) from the releasing position, and the snap block (2) released at the releasing position is driven by the energy storage of the elastic element (3) to return to the fastening position.

2. The snap fastening unit according to claim 1, wherein the triggering component is arranged on the snap block (2) and is moveable along with the snap block (2), the triggering component comprises a triggering member (43) movably arranged on the snap block (2), and a trigger end reset spring (44) for driving the triggering member (43) to move and reset, the triggering member (43) has a triggering end for operating the triggering component, the triggering end is capable of protruding from a front end surface (21a) of the clamping head (21) to be exposed on the front end surface (21a) under the driving of the trigger end reset spring (44), the triggering end has an upper triggering surface (431) and a lower avoidance drive surface (432), a vertex (Q) is formed between the upper triggering surface (431) and the lower avoidance drive surface (432), the upper triggering surface (431) and the lower avoidance drive surface (432) are arranged along a direction in which the head portion (12) is inserted into the through hole in the thin wall (1-1); during the process of inserting the head portion (12) into the through hole in the thin wall (1-1) and the process of removing the head portion (12) from the through hole in the thin wall (1-1), the upper triggering surface (431) and the lower avoidance drive surface (432) directly contact and abut a periphery of the through hole in the thin wall (1-1) to drive the triggering end to retract towards a rear side of the front end surface (21a) of the clamping head (21) of the snap block (2), and during the process of inserting the head portion (12) into the through hole in the thin wall (1-1), the upper triggering surface (431) directly contacts and abuts the periphery of the through hole in the thin wall (1-1) to operate the triggering component to unlock the first locking member (41) from the second locking member (42).

3. The snap fastening unit according to claim 2, wherein the first locking member (41) comprises a movable lock piece (411) arranged on the snap block (2); the movable lock piece (411) comprises a lock spring (412), which provides a spring force to drive the movable lock piece (411) to engage and lock with the second locking member (42); the triggering component is operated to drive the movable lock piece (411) to act such that the movable lock piece (411) disengages with the second locking member (42).

4. The snap fastening unit according to claim 3, wherein the second locking member (42) is a protrusion or a recess formed in an inner wall of the guide channel (121) of the head portion (12).

5. The fastening unit according to claim 3, wherein the movable lock piece (411) is rotatably arranged on the snap block (2), and a locking portion (4111) on the movable lock piece (411) is offset from a rotation center of the movable lock piece (411).

6. The snap fastening unit according to claim 5, wherein the locking portion (4111) is a hook-shaped hook head, and the second locking member (42) is a hooking structure allowing the hook head to hook thereon.

7. The snap fastening unit according to claim 6, wherein the triggering member (43) is a lever arm fixed or integrally formed on the movable lock piece (411), the lever arm and the movable lock piece (411) forms a lever structure with a pivot point located between the lever arm and the hook head, the lock spring (412) simultaneously serves as the trigger end reset spring (44) for driving the lever arm to be in a non-triggered state, and the lower avoidance drive surface (432) is a convex arc-shaped surface.

8. The snap fastening unit according to claim 7, wherein the lock spring (412) is a compression coil spring, one end of the compression coil spring abuts the snap block (2), and an other end of the compression coil spring abuts the lever arm, the lever arm is hook-shaped, and the compression coil spring is located in a hook opening of the lever arm.

9. The snap fastening unit according to claim 5, wherein the triggering member (43) is slidably arranged on the snap block (2); a sliding direction of the triggering member (43) is the same as a sliding direction the snap block (2); one end of the triggering member (43) has the triggering end for operating the triggering component to be in a triggered state, and an other end of the triggering member (43) has a driving end (433); the locking portion (4111) is an abutting end of the movable lock piece (411), and the movable lock piece (411) comprises a tripping action portion (4112) in transmission connection with the driving end (433); the second locking member (42) is a recess formed in the inner wall of the guide channel (121), and a stop surface (421) is formed in the recess for abutting the abutting end; the other end of the lock spring (412) opposite to the end of the lock spring (412) which abuts the movable lock piece (411) abuts the snap block (2) or the inner wall of the guide channel.

10. The snap fastening unit according to claim 9, wherein the tripping action portion (4112) is a push arm of the movable lock piece (411), and the driving end (433) is in push-fit engagement with the push arm.

11. The snap fastening unit according to claim 5, wherein the locking portion (4111) on the movable lock piece (411) is an abutting end located on a side of the rotation center of the movable lock piece (411), the second locking member (42) is a recess formed in the inner wall of the guide channel (121), a stop surface (421) is formed in the recess for abutting the abutting end, the abutting end abuts the stop surface (421) to lock the first locking member (41) with the second locking member (42), a sliding slot (4113) is formed in the movable lock piece (411) and is located between the locking portion (4111) and the rotation center of the movable lock piece (411), an insertion arm (434) is arranged on the triggering member (43), the insertion arm (434) is slidably inserted into the sliding slot (4113) to form a relative sliding engagement between the triggering member (43) and the movable lock piece (411), the insertion arm (434) abuts a side wall (41131) of the sliding slot (4113) which is close to the movable lock piece (411) to form a linkage between the triggering member (43) and the movable lock piece (411) in a rotation direction of the movable lock piece (411); when the head portion (12) is inserted into the through hole in the thin wall (1-1), the periphery of the through hole in the thin wall (1-1) abuts the upper triggering surface (431), and the triggering member (43) abuts a wall of the sliding slot (4113) through the insertion arm (434), driving the movable lock piece (411) to rotate until the abutting end disengages from the stop surface (421); the trigger end reset spring (44) is arranged between the triggering member (43) and the movable lock piece (411), a guide wall (221) that restricts a rotation of the triggering member (43) and guides the triggering member (43) to slide linearly is arranged on the snap block (2); during the process in which the head portion (12) is removed from the through hole in the thin wall (1-1), the lower avoidance drive surface (432) abuts the periphery of the through hole in the thin wall (1-1), and the triggering member (43) slides linearly on the guide wall (221).

12. The snap fastening unit according to claim 2, wherein an installation groove (22) is formed along a thickness direction of the snap block (2), a corresponding protrusion (23) is formed on the snap block (2) to enclose the installation groove (22); a clamping surface (211) of the clamping head (21) extends to the protrusion (23); the first locking member (41) and the triggering member (43) are both arranged inside the installation groove (22).

13. The snap fastening unit according to claim 1, wherein the front end surface (21a) of the clamping head (21) has a flat end surface (212) extending from a side of the front end surface (21a) close to the clamping surface (211) to a side of the front end surface (21a) away from the clamping surface (211) along a height direction of the snap block (2).

14. The snap fastening unit according to claim 13, wherein a chamfered surface (122) is formed on an end corner of the head portion (12) corresponding to an opening of the guide channel (121) and away from the fastening support wall (11), and when the snap block (2) is in the releasing position, a part of the flat end surface (212) of the snap block (2) is capable of protruding out to be exposed outside the opening of the guide channel (121) through the chamfered surface (122).

15. The snap fastening unit according to claim 1, wherein the snap block (2) comprises a tool engagement portion (24) for engaging with a tool to complete the sliding of the snap block (2) to the releasing position with the tool, and an operation window (123) is formed in the head portion (12) for exposing the tool engagement portion (24); the operation window (123) is located on a side of the fastening support wall (11) facing away from a clamping surface (211) of the snap block (2), and the operation window (123) is covered by a detachable cover plate (14) or directly opened in the head portion (12).

## Patentansprüche

1. Eine Schnappbefestigungseinheit zum Befestigen an einer oder mehreren dünnen Wänden mit Durchgangslöchern, umfassend ein Gehäuse (1) und mindestens einen Schnappblock (2), wobei das Gehäuse (1) eine Befestigungsstützwand (11) und einen Kopfabschnitt (12) aufweist, der sich von der Befestigungsstützwand (11) weg erstreckt, wobei der Kopfabschnitt (12) einen Führungskanal (121) aufweist;
wobei der Schnappblock (2) darauf beschränkt ist, gerichtet auf dem Führungskanal (121) des Kopfabschnitts (12) zu gleiten, und auf dem Kopfabschnitt (12) zwischen einer Befestigungsposition und einer Freigabeposition wechselbar ist; wobei in der Befestigungsposition ein Klemmkopf (21) des Schnappblocks (2) aus dem Kopfabschnitt (12) herausragt und mit der Befestigungsstützwand (11) in Eingriff steht, um einen befestigten Zustand zu bilden, der es dem Schnappblock (2) ermöglicht, an der einen oder den mehreren dünnen Wänden (1-1) befestigt zu sein; wobei in der Freigabeposition der Klemmkopf (21) des Schnappblocks (2) in den Kopfabschnitt (12) einfährt, um einen lösbaren Zustand zu bilden, der es dem Kopfabschnitt (12) der Schnappbefestigungseinheit ermöglicht, frei in das Durchgangsloch in der dünnen Wand (1-1) ein- und auszutreten;
wobei der Schnappblock (2) ein elastisches Element (3) umfasst, das eine elastische Belastungskraft bereitstellt, die den Schnappblock (2) antreibt, um in die Befestigungsposition zu gleiten, und den Schnappblock (2) in der Befestigungsposition hält,
wobei die Schnappbefestigungseinheit ferner eine automatische Verriegelungsvorrichtung umfasst; wobei die automatische Verriegelungsvorrichtung ein erstes Verriegelungselement (41), das an dem Schnappblock (2) angeordnet und zusammen mit dem Schnappblock (2) bewegbar ist, und ein zweites Verriegelungselement (42), das an dem Kopfabschnitt (12) angeordnet ist, umfasst; wobei, wenn der Schnappblock (2) in die Freigabeposition gleitet, das erste Verriegelungselement (41) und das zweite Verriegelungselement (42) automatisch miteinander verriegeln, um den Schnappblock (2) an dem Kopfabschnitt (12) zu verriegeln, und das elastische Element (3) währenddessen die Energiespeicherung abschließt; wobei die automatische Verriegelungsvorrichtung ferner eine Auslösekomponente umfasst, die das erste Verriegelungselement (41) antreibt, um von dem zweiten Verriegelungselement (42) zu entriegeln, um den Schnappblock (2) aus der Freigabeposition freizugeben, und der in der Freigabeposition freigegebene Schnappblock (2) durch die Energiespeicherung des elastischen Elements (3) angetrieben wird, um in die Befestigungsposition zurückzukehren.

2. Die Schnappbefestigungseinheit nach Anspruch 1, wobei die Auslösekomponente an dem Schnappblock (2) angeordnet und zusammen mit dem Schnappblock (2) bewegbar ist, wobei die Auslösekomponente ein Auslöseelement (43), das bewegbar an dem Schnappblock (2) angeordnet ist, und eine Auslöseende-Rückstellfeder (44) zum Antreiben des Auslöseelements (43) zum Bewegen und Zurücksetzen umfasst, wobei das Auslöseelement (43) ein Auslöseende zum Betätigen der Auslösekomponente aufweist, wobei das Auslöseende in der Lage ist, aus einer vorderen Stirnfläche (21a) des Klemmkopfes (21) herauszuragen, um unter dem Antrieb der Auslöseende-Rückstellfeder (44) an der vorderen Stirnfläche (21a) freigelegt zu werden, wobei das Auslöseende eine obere Auslösefläche (431) und eine untere Ausweichantriebsfläche (432) aufweist, wobei ein Scheitelpunkt (Q) zwischen der oberen Auslösefläche (431) und der unteren Ausweichantriebsfläche (432) gebildet ist, wobei die obere Auslösefläche (431) und die untere Ausweichantriebsfläche (432) entlang einer Richtung angeordnet sind, in der der Kopfabschnitt (12) in das Durchgangsloch in der dünnen Wand (1-1) eingeführt wird; wobei während des Vorgangs des Einführens des Kopfabschnitts (12) in das Durchgangsloch in der dünnen Wand (1-1) und des Vorgangs des Entfernens des Kopfabschnitts (12) aus dem Durchgangsloch in der dünnen Wand (1-1) die obere Auslösefläche (431) und die untere Ausweichantriebsfläche (432) einen Umfang des Durchgangslochs in der dünnen Wand (1-1) direkt berühren und an diesem anliegen, um das Auslöseende anzutreiben, sich in Richtung einer Rückseite der vorderen Stirnfläche (21a) des Klemmkopfes (21) des Schnappblocks (2) zurückzuziehen, und wobei während des Vorgangs des Einführens des Kopfabschnitts (12) in das Durchgangsloch in der dünnen Wand (1-1) die obere Auslösefläche (431) den Umfang des Durchgangslochs in der dünnen Wand (1-1) direkt berührt und an diesem anliegt, um die Auslösekomponente zu betätigen, um das erste Verriegelungselement (41) von dem zweiten Verriegelungselement (42) zu entriegeln.

3. Die Schnappbefestigungseinheit nach Anspruch 2, wobei das erste Verriegelungselement (41) ein bewegliches Verriegelungsteil (411) umfasst, das an dem Schnappblock (2) angeordnet ist; wobei das bewegliche Verriegelungsteil (411) eine Verriegelungsfeder (412) umfasst, die eine Federkraft bereitstellt, um das bewegliche Verriegelungsteil (411) anzutreiben, um mit dem zweiten Verriegelungselement (42) in Eingriff zu kommen und zu verriegeln; wobei die Auslösekomponente betätigt wird, um das bewegliche Verriegelungsteil (411) so anzutreiben, dass das bewegliche Verriegelungsteil (411) außer Eingriff mit dem zweiten Verriegelungselement (42) kommt.

4. Die Schnappbefestigungseinheit nach Anspruch 3, wobei das zweite Verriegelungselement (42) ein Vorsprung oder eine Aussparung ist, der/die in einer Innenwand des Führungskanals (121) des Kopfabschnitts (12) ausgebildet ist.

5. Die Schnappbefestigungseinheit nach Anspruch 3, wobei das bewegliche Verriegelungsteil (411) drehbar an dem Schnappblock (2) angeordnet ist, und ein Verriegelungsabschnitt (4111) an dem beweglichen Verriegelungsteil (411) von einem Drehzentrum des beweglichen Verriegelungsteils (411) versetzt ist.

6. Die Schnappbefestigungseinheit nach Anspruch 5, wobei der Verriegelungsabschnitt (4111) ein hakenförmiger Hakenkopf ist, und das zweite Verriegelungselement (42) eine Einhakstruktur ist, die es dem Hakenkopf ermöglicht, sich daran einzuhaken.

7. Die Schnappbefestigungseinheit nach Anspruch 6, wobei das Auslöseelement (43) ein Hebelarm ist, der an dem beweglichen Verriegelungsteil (411) befestigt oder einstückig daran angeformt ist, wobei der Hebelarm und das bewegliche Verriegelungsteil (411) eine Hebelstruktur bilden, bei der sich ein Drehpunkt zwischen dem Hebelarm und dem Hakenkopf befindet, wobei die Verriegelungsfeder (412) gleichzeitig als die Auslöseende-Rückstellfeder (44) dient, um den Hebelarm in einen nicht ausgelösten Zustand anzutreiben, und die untere Ausweichantriebsfläche (432) eine konvexe bogenförmige Fläche ist.

8. Die Schnappbefestigungseinheit nach Anspruch 7, wobei die Verriegelungsfeder (412) eine Schraubendruckfeder ist, ein Ende der Schraubendruckfeder an dem Schnappblock (2) anliegt und ein anderes Ende der Schraubendruckfeder an dem Hebelarm anliegt, der Hebelarm hakenförmig ist und die Schraubendruckfeder in einer Hakenöffnung des Hebelarms angeordnet ist.

9. Die Schnappbefestigungseinheit nach Anspruch 5, wobei das Auslöseelement (43) verschiebbar an dem Schnappblock (2) angeordnet ist; eine Gleitrichtung des Auslöseelements (43) gleich einer Gleitrichtung des Schnappblocks (2) ist; ein Ende des Auslöseelements (43) das Auslöseende zum Betätigen der Auslösekomponente in einen ausgelösten Zustand aufweist und ein anderes Ende des Auslöseelements (43) ein Antriebsende (433) aufweist; der Verriegelungsabschnitt (4111) ein Anlageende des beweglichen Verriegelungsteils (411) ist und das bewegliche Verriegelungsteil (411) einen Auslöseaktionsabschnitt (4112) in Getriebeverbindung mit dem Antriebsende (433) umfasst; das zweite Verriegelungselement (42) eine in der Innenwand des Führungskanals (121) ausgebildete Aussparung ist und eine Anschlagfläche (421) in der Aussparung zur Anlage des Anlageendes ausgebildet ist; das andere Ende der Verriegelungsfeder (412), das dem Ende der Verriegelungsfeder (412) gegenüberliegt, welches an dem beweglichen Verriegelungsteil (411) anliegt, an dem Schnappblock (2) oder der Innenwand des Führungskanals anliegt.

10. Die Schnappbefestigungseinheit nach Anspruch 9, wobei der Auslöseaktionsabschnitt (4112) ein Schubarm des beweglichen Verriegelungsteils (411) ist und das Antriebsende (433) in Schubeingriff mit dem Schubarm steht.

11. Die Schnappbefestigungseinheit nach Anspruch 5, wobei der Verriegelungsabschnitt (4111) an dem beweglichen Verriegelungsteil (411) ein Anlageende ist, das sich auf einer Seite des Drehzentrums des beweglichen Verriegelungsteils (411) befindet, das zweite Verriegelungselement (42) eine in der Innenwand des Führungskanals (121) ausgebildete Aussparung ist, eine Anschlagfläche (421) in der Aussparung zur Anlage des Anlageendes ausgebildet ist, das Anlageende an der Anschlagfläche (421) anliegt, um das erste Verriegelungselement (41) mit dem zweiten Verriegelungselement (42) zu verriegeln, ein Gleitschlitz (4113) in dem beweglichen Verriegelungsteil (411) ausgebildet ist und sich zwischen dem Verriegelungsabschnitt (4111) und dem Drehzentrum des beweglichen Verriegelungsteils (411) befindet, ein Einsteckarm (434) an dem Auslöseelement (43) angeordnet ist, der Einsteckarm (434) verschiebbar in den Gleitschlitz (4113) eingesteckt ist, um einen relativen Gleiteingriff zwischen dem Auslöseelement (43) und dem beweglichen Verriegelungsteil (411) zu bilden, der Einsteckarm (434) an einer Seitenwand (41131) des Gleitschlitzes (4113) anliegt, die nahe dem beweglichen Verriegelungsteil (411) ist, um eine Kopplung zwischen dem Auslöseelement (43) und dem beweglichen Verriegelungsteil (411) in einer Drehrichtung des beweglichen Verriegelungsteils (411) zu bilden; wenn der Kopfabschnitt (12) in das Durchgangsloch in der dünnen Wand (1-1) eingeführt wird, der Umfang des Durchgangslochs in der dünnen Wand (1-1) an der oberen Auslösefläche (431) anliegt und das Auslöseelement (43) über den Einsteckarm (434) an einer Wand des Gleitschlitzes (4113) anliegt, was das bewegliche Verriegelungsteil (411) antreibt, sich zu drehen, bis sich das Anlageende von der Anschlagfläche (421) löst; die Auslöseende-Rückstellfeder (44) zwischen dem Auslöseelement (43) und dem beweglichen Verriegelungsteil (411) angeordnet ist, eine Führungswand (221), die eine Rotation des Auslöseelements (43) einschränkt und das Auslöseelement (43) führt, um linear zu gleiten, an dem Schnappblock (2) angeordnet ist; während des Vorgangs, bei dem der Kopfabschnitt (12) aus dem Durchgangsloch in der dünnen Wand (1-1) entfernt wird, die untere Ausweichantriebsfläche (432) am Umfang des Durchgangslochs in der dünnen Wand (1-1) anliegt und das Auslöseelement (43) linear auf der Führungswand (221) gleitet.

12. Die Schnappbefestigungseinheit nach Anspruch 2, wobei eine Montagenut (22) entlang einer Dickenrichtung des Schnappblocks (2) ausgebildet ist, ein entsprechender Vorsprung (23) an dem Schnappblock (2) ausgebildet ist, um die Montagenut (22) zu umschließen; sich eine Klemmfläche (211) des Klemmkopfes (21) bis zu dem Vorsprung (23) erstreckt; das erste Verriegelungselement (41) und das Auslöseelement (43) beide innerhalb der Montagenut (22) angeordnet sind.

13. Die Schnappbefestigungseinheit nach Anspruch 1, wobei die vordere Stirnfläche (21a) des Klemmkopfes (21) eine flache Stirnfläche (212) aufweist, die sich von einer Seite der vorderen Stirnfläche (21a) nahe der Klemmfläche (211) zu einer Seite der vorderen Stirnfläche (21a) weg von der Klemmfläche (211) entlang einer Höhenrichtung des Schnappblocks (2) erstreckt.

14. Die Schnappbefestigungseinheit nach Anspruch 13, wobei eine abgeschrägte Fläche (122) an einer Endecke des Kopfabschnitts (12) ausgebildet ist, die einer Öffnung des Führungskanals (121) entspricht und von der Befestigungsstützwand (11) abgewandt ist, und wenn sich der Schnappblock (2) in der Freigabeposition befindet, ein Teil der flachen Stirnfläche (212) des Schnappblocks (2) in der Lage ist, herauszuragen, um außerhalb der Öffnung des Führungskanals (121) durch die abgeschrägte Fläche (122) freigelegt zu werden.

15. Die Schnappbefestigungseinheit nach Anspruch 1, wobei der Schnappblock (2) einen Werkzeugeingriffsabschnitt (24) zum Eingriff mit einem Werkzeug umfasst, um das Gleiten des Schnappblocks (2) in die Freigabeposition mit dem Werkzeug abzuschließen, und ein Bedienfenster (123) in dem Kopfabschnitt (12) zum Freilegen des Werkzeugeingriffsabschnitts (24) ausgebildet ist; sich das Bedienfenster (123) auf einer Seite der Befestigungsstützwand (11) befindet, die von einer Klemmfläche (211) des Schnappblocks (2) abgewandt ist, und das Bedienfenster (123) von einer abnehmbaren Abdeckplatte (14) abgedeckt ist oder direkt in dem Kopfabschnitt (12) geöffnet ist.

## Revendications

1. Une unité de fixation par encliquetage destinée à être fixée à une ou plusieurs parois minces avec des trous traversants, comprenant un boîtier (1) et au moins un bloc d'encliquetage (2), le boîtier (1) présentant une paroi de support de fixation (11) et une partie de tête (12) s'étendant à l'opposé de la paroi de support de fixation (11), la partie de tête (12) présentant un canal de guidage (121);
le bloc d'encliquetage (2) étant restreint pour coulisser de manière directionnelle sur le canal de guidage (121) de la partie de tête (12) et pouvant passer d'une position de fixation à une position de libération sur la partie de tête (12); dans la position de fixation, une tête de serrage (21) du bloc d'encliquetage (2) faisant saillie de la partie de tête (12) et s'engageant avec la paroi de support de fixation (11) pour former un état fixé permettant au bloc d'encliquetage (2) d'être fixé à ladite ou auxdites parois minces (1-1); dans la position de libération, la tête de serrage (21) du bloc d'encliquetage (2) se rétractant dans la partie de tête (12) pour former un état détachable permettant à la partie de tête (12) de l'unité de fixation par encliquetage d'entrer et de sortir librement du trou traversant dans la paroi mince (1-1);
le bloc d'encliquetage (2) comprenant un élément élastique (3) fournissant une force de charge élastique qui entraîne le bloc d'encliquetage (2) à coulisser vers la position de fixation et maintient le bloc d'encliquetage (2) dans la position de fixation,
dans laquelle l'unité de fixation par encliquetage comprend en outre un dispositif de verrouillage automatique; le dispositif de verrouillage automatique comprend un premier élément de verrouillage (41) agencé sur le bloc d'encliquetage (2) et mobile avec le bloc d'encliquetage (2), et un deuxième élément de verrouillage (42) agencé sur la partie de tête (12); lorsque le bloc d'encliquetage (2) coulisse vers la position de libération, le premier élément de verrouillage (41) et le deuxième élément de verrouillage (42) se verrouillent automatiquement ensemble pour verrouiller le bloc d'encliquetage (2) sur la partie de tête (12), et pendant ce temps l'élément élastique (3) achève une accumulation d'énergie; le dispositif de verrouillage automatique comprend en outre un composant de déclenchement qui entraîne le premier élément de verrouillage (41) à se déverrouiller du deuxième élément de verrouillage (42) pour libérer le bloc d'encliquetage (2) de la position de libération, et le bloc d'encliquetage (2) libéré à la position de libération est entraîné par l'accumulation d'énergie de l'élément élastique (3) pour retourner à la position de fixation.

2. L'unité de fixation par encliquetage selon la revendication 1, dans laquelle le composant de déclenchement est agencé sur le bloc d'encliquetage (2) et est mobile avec le bloc d'encliquetage (2), le composant de déclenchement comprend un élément de déclenchement (43) agencé de manière mobile sur le bloc d'encliquetage (2), et un ressort de rappel d'extrémité de déclenchement (44) pour entraîner l'élément de déclenchement (43) à se déplacer et se réinitialiser, l'élément de déclenchement (43) présente une extrémité de déclenchement pour actionner le composant de déclenchement, l'extrémité de déclenchement est capable de faire saillie d'une surface d'extrémité avant (21a) de la tête de serrage (21) pour être exposée sur la surface d'extrémité avant (21a) sous l'entraînement du ressort de rappel d'extrémité de déclenchement (44), l'extrémité de déclenchement présente une surface de déclenchement supérieure (431) et une surface d'entraînement d'évitement inférieure (432), un sommet (Q) est formé entre la surface de déclenchement supérieure (431) et la surface d'entraînement d'évitement inférieure (432), la surface de déclenchement supérieure (431) et la surface d'entraînement d'évitement inférieure (432) sont agencées le long d'une direction dans laquelle la partie de tête (12) est insérée dans le trou traversant dans la paroi mince (1-1); pendant le processus d'insertion de la partie de tête (12) dans le trou traversant dans la paroi mince (1-1) et le processus de retrait de la partie de tête (12) du trou traversant dans la paroi mince (1-1), la surface de déclenchement supérieure (431) et la surface d'entraînement d'évitement inférieure (432) contactent et viennent en butée directement contre une périphérie du trou traversant dans la paroi mince (1-1) pour entraîner l'extrémité de déclenchement à se rétracter vers un côté arrière de la surface d'extrémité avant (21a) de la tête de serrage (21) du bloc d'encliquetage (2), et pendant le processus d'insertion de la partie de tête (12) dans le trou traversant dans la paroi mince (1-1), la surface de déclenchement supérieure (431) contacte et vient en butée directement contre la périphérie du trou traversant dans la paroi mince (1-1) pour actionner le composant de déclenchement afin de déverrouiller le premier élément de verrouillage (41) du deuxième élément de verrouillage (42).

3. L'unité de fixation par encliquetage selon la revendication 2, dans laquelle le premier élément de verrouillage (41) comprend une pièce de verrouillage mobile (411) agencée sur le bloc d'encliquetage (2); la pièce de verrouillage mobile (411) comprend un ressort de verrouillage (412), qui fournit une force de ressort pour entraîner la pièce de verrouillage mobile (411) à s'engager et se verrouiller avec le deuxième élément de verrouillage (42); le composant de déclenchement est actionné pour entraîner la pièce de verrouillage mobile (411) à agir de telle sorte que la pièce de verrouillage mobile (411) se désengage du deuxième élément de verrouillage (42).

4. L'unité de fixation par encliquetage selon la revendication 3, dans laquelle le deuxième élément de verrouillage (42) est une saillie ou un évidement formé(e) dans une paroi interne du canal de guidage (121) de la partie de tête (12).

5. L'unité de fixation selon la revendication 3, dans laquelle la pièce de verrouillage mobile (411) est agencée de manière rotative sur le bloc d'encliquetage (2), et une partie de verrouillage (4111) sur la pièce de verrouillage mobile (411) est décalée par rapport à un centre de rotation de la pièce de verrouillage mobile (411).

6. L'unité de fixation par encliquetage selon la revendication 5, dans laquelle la partie de verrouillage (4111) est une tête d'accrochage en forme de crochet, et le deuxième élément de verrouillage (42) est une structure d'accrochage permettant à la tête d'accrochage de s'y accrocher.

7. L'unité de fixation par encliquetage selon la revendication 6, dans laquelle l'élément de déclenchement (43) est un bras de levier fixé ou formé d'un seul tenant sur la pièce de verrouillage mobile (411), le bras de levier et la pièce de verrouillage mobile (411) forment une structure de levier avec un point de pivotement situé entre le bras de levier et la tête d'accrochage, le ressort de verrouillage (412) sert simultanément de ressort de rappel d'extrémité de déclenchement (44) pour entraîner le bras de levier à être dans un état non déclenché, et la surface d'entraînement d'évitement inférieure (432) est une surface en forme d'arc convexe.

8. L'unité de fixation par encliquetage selon la revendication 7, dans laquelle le ressort de verrouillage (412) est un ressort hélicoïdal de compression, une extrémité du ressort hélicoïdal de compression vient en butée contre le bloc d'encliquetage (2), et une autre extrémité du ressort hélicoïdal de compression vient en butée contre le bras de levier, le bras de levier est en forme de crochet, et le ressort hélicoïdal de compression est situé dans une ouverture de crochet du bras de levier.

9. L'unité de fixation par encliquetage selon la revendication 5, dans laquelle l'élément de déclenchement (43) est agencé de manière coulissante sur le bloc d'encliquetage (2); une direction de coulissement de l'élément de déclenchement (43) est la même qu'une direction de coulissement du bloc d'encliquetage (2); une extrémité de l'élément de déclenchement (43) présente l'extrémité de déclenchement pour actionner le composant de déclenchement pour qu'il soit dans un état déclenché, et une autre extrémité de l'élément de déclenchement (43) présente une extrémité d'entraînement (433); la partie de verrouillage (4111) est une extrémité de butée de la pièce de verrouillage mobile (411), et la pièce de verrouillage mobile (411) comprend une partie d'action de déclenchement (4112) en connexion de transmission avec l'extrémité d'entraînement (433); le deuxième élément de verrouillage (42) est un évidement formé dans la paroi interne du canal de guidage (121), et une surface d'arrêt (421) est formée dans l'évidement pour venir en butée contre l'extrémité de butée; l'autre extrémité du ressort de verrouillage (412) opposée à l'extrémité du ressort de verrouillage (412) qui vient en butée contre la pièce de verrouillage mobile (411) vient en butée contre le bloc d'encliquetage (2) ou la paroi interne du canal de guidage.

10. L'unité de fixation par encliquetage selon la revendication 9, dans laquelle la partie d'action de déclenchement (4112) est un bras de poussée de la pièce de verrouillage mobile (411), et l'extrémité d'entraînement (433) est en engagement par poussée avec le bras de poussée.

11. L'unité de fixation par encliquetage selon la revendication 5, dans laquelle la partie de verrouillage (4111) sur la pièce de verrouillage mobile (411) est une extrémité de butée située sur un côté du centre de rotation de la pièce de verrouillage mobile (411), le deuxième élément de verrouillage (42) est un évidement formé dans la paroi interne du canal de guidage (121), une surface d'arrêt (421) est formée dans l'évidement pour venir en butée contre l'extrémité de butée, l'extrémité de butée vient en butée contre la surface d'arrêt (421) pour verrouiller le premier élément de verrouillage (41) avec le deuxième élément de verrouillage (42), une fente de glissement (4113) est formée dans la pièce de verrouillage mobile (411) et est située entre la partie de verrouillage (4111) et le centre de rotation de la pièce de verrouillage mobile (411), un bras d'insertion (434) est agencé sur l'élément de déclenchement (43), le bras d'insertion (434) est inséré de manière coulissante dans la fente de glissement (4113) pour former un engagement coulissant relatif entre l'élément de déclenchement (43) et la pièce de verrouillage mobile (411), le bras d'insertion (434) vient en butée contre une paroi latérale (41131) de la fente de glissement (4113) qui est proche de la pièce de verrouillage mobile (411) pour former une liaison entre l'élément de déclenchement (43) et la pièce de verrouillage mobile (411) dans une direction de rotation de la pièce de verrouillage mobile (411); lorsque la partie de tête (12) est insérée dans le trou traversant dans la paroi mince (1-1), la périphérie du trou traversant dans la paroi mince (1-1) vient en butée contre la surface de déclenchement supérieure (431), et l'élément de déclenchement (43) vient en butée contre une paroi de la fente de glissement (4113) par l'intermédiaire du bras d'insertion (434), entraînant la pièce de verrouillage mobile (411) à tourner jusqu'à ce que l'extrémité de butée se désengage de la surface d'arrêt (421); le ressort de rappel d'extrémité de déclenchement (44) est agencé entre l'élément de déclenchement (43) et la pièce de verrouillage mobile (411), une paroi de guidage (221) qui restreint une rotation de l'élément de déclenchement (43) et guide l'élément de déclenchement (43) pour coulisser linéairement est agencée sur le bloc d'encliquetage (2); pendant le processus dans lequel la partie de tête (12) est retirée du trou traversant dans la paroi mince (1-1), la surface d'entraînement d'évitement inférieure (432) vient en butée contre la périphérie du trou traversant dans la paroi mince (1-1), et l'élément de déclenchement (43) coulisse linéairement sur la paroi de guidage (221).

12. L'unité de fixation par encliquetage selon la revendication 2, dans laquelle une rainure d'installation (22) est formée le long d'une direction d'épaisseur du bloc d'encliquetage (2), une saillie correspondante (23) est formée sur le bloc d'encliquetage (2) pour renfermer la rainure d'installation (22); une surface de serrage (211) de la tête de serrage (21) s'étend jusqu'à la saillie (23); le premier élément de verrouillage (41) et l'élément de déclenchement (43) sont tous deux agencés à l'intérieur de la rainure d'installation (22).

13. L'unité de fixation par encliquetage selon la revendication 1, dans laquelle la surface d'extrémité avant (21a) de la tête de serrage (21) présente une surface d'extrémité plate (212) s'étendant depuis un côté de la surface d'extrémité avant (21a) proche de la surface de serrage (211) jusqu'à un côté de la surface d'extrémité avant (21a) éloigné de la surface de serrage (211) le long d'une direction de hauteur du bloc d'encliquetage (2).

14. L'unité de fixation par encliquetage selon la revendication 13, dans laquelle une surface chanfreinée (122) est formée sur un coin d'extrémité de la partie de tête (12) correspondant à une ouverture du canal de guidage (121) et à distance de la paroi de support de fixation (11), et lorsque le bloc d'encliquetage (2) est dans la position de libération, une partie de la surface d'extrémité plate (212) du bloc d'encliquetage (2) est capable de faire saillie pour être exposée à l'extérieur de l'ouverture du canal de guidage (121) à travers la surface chanfreinée (122).

15. L'unité de fixation par encliquetage selon la revendication 1, dans laquelle le bloc d'encliquetage (2) comprend une partie d'engagement d'outil (24) pour s'engager avec un outil afin d'achever le coulissement du bloc d'encliquetage (2) vers la position de libération avec l'outil, et une fenêtre d'opération (123) est formée dans la partie de tête (12) pour exposer la partie d'engagement d'outil (24); la fenêtre d'opération (123) est située sur un côté de la paroi de support de fixation (11) orienté à l'opposé d'une surface de serrage (211) du bloc d'encliquetage (2), et la fenêtre d'opération (123) est recouverte par une plaque de recouvrement détachable (14) ou directement ouverte dans la partie de tête (12).
